# EUROPEAN PATENT APPLICATION

(11) **EP 4 852 406 A1**
(43) Date of publication of application: **09.12.2026**
(21) Application number: 24929263.2
(22) Date of filing: 25.11.2024
(51) Int. Cl.: H04L 65/1016

(54) **COMMUNICATION METHOD AND APPARATUS**

(30) Priority: 15.03.2024 CN 202410310005
(71) Applicant: Huawei Technologies Co., Ltd., Shenzhen, Guangdong 518129 (CN)
(72) Inventor: JI, Mengdi, Shenzhen, Guangdong 518129 (CN); ZUO, Jun, Shenzhen, Guangdong 518129 (CN); HU, Xiaokun, Shenzhen, Guangdong 518129 (CN); SUN, Zhao, Shenzhen, Guangdong 518129 (CN)
(74) Representative: Huawei European IPR
(86) International application number: PCT/CN2024/134283
(87) International publication number: WO 2025/189819

(57) **Abstract**

This application provides a communication method and apparatus, and relates to the field of communication technologies. In this method, before creating an IMS data channel, a communication entity may determine whether a created connection (for example, an SCTP association) is capable of carrying the IMS data channel. If there is one or more created connection capable of carrying the IMS data channel, the communication entity does not create a new connection, but indicates to use the created connection to carry the IMS data channel. If there is no created connection capable of carrying the IMS data channel, the communication entity indicates to use a new connection to carry the IMS data channel, and creates the new connection. Therefore, when the IMS data channel is created according to the foregoing method, the created connection may be multiplexed, so that resource overheads can be reduced.

## Description

This application claims priority to Chinese Patent Application No. 202410310005.8, filed with the China National Intellectual Property Administration on March 15, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To implement service innovation in 5th generation (5th generation, 5G) new call scenarios, data channels (data channels, DCs) are introduced in 5G new calls in addition to audio channels and video channels of internet protocol multimedia subsystem (internet protocol multimedia subsystem, IMS) networks. The data channel is also referred to as an IMS data channel. Terminals in a same IMS session may negotiate a data channel, and perform transmission of application data through the negotiated data channel.

Currently, terminals may negotiate at least one data channel for one application, for transmission of data of the application. An IMS session usually has a plurality of applications. When terminals use existing methods to negotiate data channels for these applications, a problem of high resource overheads occurs.

### SUMMARY

This application provides a communication method and apparatus, so that a created connection can be multiplexed during creation of a data channel, to reduce resource overheads.

To achieve the foregoing objective, the following technical solutions are used in this application.

According to a first aspect, a communication method is provided. The method may be performed by a communication entity. The communication entity herein may be a communication entity itself, or may be a processor, a circuit, a module, a logical node, a chip, a chip system, or the like, in the communication entity, that implements the method. Optionally, the communication entity is deployed in a terminal.

The method includes: receiving a first request used to request to create a first data channel, where the first data channel is a data channel between a first communication apparatus (for example, the foregoing terminal) and a second communication apparatus, and is used to carry data of a first application, and the first data channel is associated with an IMS session between the first communication apparatus and the second communication apparatus; and if there is one or more created connection capable of carrying the first data channel, sending a response to the first request, where the response includes first media description information, the first media description information includes first indication information, the first indication information indicates a first connection, and the first connection is a connection corresponding to the first data channel in the created connections; or if there is no created connection capable of carrying the first data channel, sending a response to the first request and creating a second connection, where the response includes second media description information, the second media description information includes second indication information, the second indication information indicates the second connection, and the second connection is a connection corresponding to the first data channel.

According to the method provided in the first aspect, before creating the first data channel, the terminal may determine, in the created connections, whether there is a connection capable of carrying the first data channel. If there is a connection capable of carrying the first data channel, the first data channel may multiplex the connection, so that resource overheads can be reduced.

In a possible implementation, the first indication information includes internet protocol address information, user datagram protocol port information, and stream control transmission protocol port information.

Based on the foregoing possible implementation, if there is one or more created connection capable of carrying the first data channel, the first data channel may reuse the internet protocol address information, the user datagram protocol port information, and the stream control transmission protocol port information, to reduce resource overheads.

In a possible implementation, the method further includes: receiving a second request, where the second request is used to request to create a second data channel, the second data channel is used to carry data of a second application, and the second application is different from the first application; and if the created connection is not capable of carrying the second data channel, sending a response to the second request and creating a third connection, where the response to the second request includes third media description information, the third media description information includes third indication information corresponding to the second data channel, and the third indication information indicates the third connection; if the first connection is capable of carrying the second data channel, sending a response to the second request, where the response to the second request includes fourth media description information, and the fourth media description information includes the first indication information; or if the second connection is capable of carrying the second data channel, sending a response to the second request, where the response to the second request includes fifth media description information, and the fifth media description information includes the second indication information.

Based on the foregoing possible implementation, before creating the second data channel, the terminal may determine, in the created connections, whether there is a connection capable of carrying the second data channel, to reduce resource overheads. In addition, if the first connection (or the second connection) is capable of carrying the second data channel, it indicates that one connection may carry data channels for two different applications. Therefore, the connection may be used for transmission of data of the different applications.

In a possible implementation, that the second connection is capable of carrying the second data channel includes: a quality-of-service requirement of the second data channel is the same as a quality-of-service requirement of the first data channel; or a quality-of-service requirement of the second data channel is lower than a quality-of-service requirement of the first data channel.

Based on the foregoing possible implementation, whether the second connection is capable of carrying the second data channel may be determined based on the quality-of-service requirement of the second data channel and the quality-of-service requirement of the first data channel.

In a possible implementation, that the second connection is capable of carrying the second data channel further includes: the second data channel is a data channel between the first communication apparatus and the second communication apparatus.

Based on the foregoing possible implementation, whether the second connection is capable of carrying the second data channel may be determined based on endpoint information of the second data channel.

In a possible implementation, the method further includes: sending sixth media description information to a network side, where the sixth media description information includes information about the connection corresponding to the first data channel and information about a connection corresponding to the second data channel.

Based on the foregoing possible implementation, the sixth media description information may be sent to negotiate the second data channel.

In a possible implementation, the sixth media description information further includes identification information of the first data channel and identification information of the second data channel.

Based on the foregoing possible implementation, it may be determined that data channels corresponding to the sixth media description information are the first data channel and the second data channel.

In a possible implementation, the method further includes: if the first request includes information about the first connection, determining that the first connection is capable of carrying the first data channel; or if the first request does not include the information about the connection corresponding to the first data channel, determining that none of created connections is capable of carrying the first data channel.

Based on the foregoing possible implementation, whether the created connection is capable of carrying the first data channel may be determined depending on whether the first request includes the information about the connection corresponding to the first data channel.

According to a second aspect, a communication apparatus is provided. The communication apparatus is configured to implement the foregoing method. The communication apparatus may be the terminal in the first aspect. The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing functions.

In a possible implementation, the communication apparatus may include a processing module and an interface module. The processing module may be configured to implement a processing function in any one of the first aspect and the possible implementations of the first aspect. The processing module may be, for example, a processor. The interface module may also be referred to as an interface unit, and is configured to implement a sending function and/or a receiving function in any one of the first aspect and the possible implementations of the first aspect. The interface module may include an interface circuit, a transceiver machine, a transceiver, or a communication interface.

In a possible implementation, the interface module includes a sending module and a receiving module, respectively configured to implement sending and receiving functions in any one of the first aspect and the possible implementations of the first aspect.

According to a third aspect, a communication apparatus is provided. The communication apparatus includes: a processor, configured to, by executing a computer program (or computer-executable instructions) stored in a memory, and/or through a logic circuit, cause the communication apparatus to perform the method according to the first aspect. The communication apparatus may be the terminal in the first aspect. Optionally, there may be one or more processors.

In a possible implementation, the communication apparatus further includes a memory.

In a possible implementation, the processor and the memory are integrated together; or the memory is independent of the processor.

In a possible implementation, the communication apparatus further includes a communication interface. The communication interface is used by the communication apparatus to communicate with another device, for example, send or receive data and/or a signal. For example, the communication interface may be a transceiver, a circuit, a bus, a module, or another type of communication interface.

In a possible implementation, the communication apparatus is a chip or a chip system. Optionally, when the communication apparatus is the chip system, the communication apparatus may include a chip, or may include a chip and another discrete device.

According to a fourth aspect, a communication apparatus is provided. The communication apparatus includes a processor and an interface circuit. The interface circuit is configured to: receive a computer program or instructions, and transmit the computer program or the instructions to the processor. The processor is configured to execute the computer program or the instructions, to cause the communication apparatus to perform the method according to the first aspect. The communication apparatus may be the terminal in the first aspect. Optionally, there may be one or more processors.

In a possible implementation, the communication apparatus is a chip or a chip system. Optionally, when the communication apparatus is the chip system, the communication apparatus may include a chip, or may include a chip and another discrete device.

According to a fifth aspect, a computer-readable storage medium is provided. The computer-readable storage medium stores instructions. When the instructions are run on a computer, the computer is caused to perform the method according to the first aspect.

According to a sixth aspect, a computer program product including instructions is provided. When the computer program product is run on a computer, the computer is caused to perform the method according to the first aspect.

According to a seventh aspect, a communication system is provided. The communication system includes at least two terminals configured to perform the method according to the first aspect.

For technical effects brought by any possible implementation of the second aspect to the seventh aspect, refer to technical effects brought by the first aspect or different possible implementations of the first aspect. Details are not described herein again.

It may be understood that the solutions in the foregoing aspects may be combined if the solutions are not contradictory.

### BRIEF DESCRIPTION OF DRAWINGS

FIG. 1A is a diagram of a protocol stack of a web real-time communication (web real-time communication, WebRTC) data channel;
FIG. 1B is a diagram of an IMS session;
FIG. 1C is a diagram of a protocol stack of an IMS session;
FIG. 1D is a diagram of obtaining a data channel application by a terminal 1 and a terminal 2;
FIG. 1E is a diagram of interaction between a session description protocol (session description protocol, SDP) offerer and an SDP answerer;
FIG. 1F is a diagram of an architecture of a WebRTC user agent;
FIG. 1G is a diagram of a WebRTC signaling model;
FIG. 1H is a diagram of a process of SDP exchange in WebRTC;
FIG. 1I is a diagram of a media negotiation process of a WebRTC data channel;
FIG. 2 is a diagram of a media negotiation process of an IMS data channel;
FIG. 3A is a diagram 1 of a communication scenario;
FIG. 3B is a diagram 2 of a communication scenario;
FIG. 3C is a diagram of an architecture of a DCMTSI client;
FIG. 3D is a diagram 1 of a data channel logical architecture supported by a terminal;
FIG. 3E is a diagram 2 of a data channel logical architecture supported by a terminal;
FIG. 4 is a diagram of a hardware structure of a communication apparatus according to this application;
FIG. 5 is a schematic flowchart 1 of a communication method according to this application;
FIG. 6 is a schematic flowchart 2 of a communication method according to this application;
FIG. 7A and FIG. 7B are a schematic flowchart 3 of a communication method according to this application;
FIG. 8A and FIG. 8B are a schematic flowchart 4 of a communication method according to this application;
FIG. 9A, FIG. 9B, FIG. 9C, and FIG. 9D are a schematic flowchart 5 of a communication method according to this application; and
FIG. 10 is a diagram of a structure of a communication apparatus according to this application.

### DESCRIPTION OF EMBODIMENTS

Before technical solutions of this application are described, related technical terms in this application are described. It may be understood that the description is intended to make this application easier to understand, but should not be construed as a limitation on the protection scope claimed in this application.

### 1. Terminal

The terminal may be referred to as user equipment (user equipment, UE), a terminal device, a terminal apparatus, an access terminal, a subscriber unit, a subscriber station, a mobile station (mobile station, MS), a mobile terminal (mobile terminal, MT), a remote station, a remote terminal, a mobile device, a user terminal, a wireless communication device, a user agent, a user apparatus, or the like, and is a device having a wireless or wired communication capability. For example, the terminal may be connected to a wireless access device through an air interface, or the terminal may be connected to a wired access device through a wired interface. From a perspective of a product form, the terminal may include a handheld device, a vehicle-mounted device, a wearable device, a compute device, or the like having a communication function. For example, the terminal may be a mobile phone (mobile phone), a tablet computer (pad), a computer (for example, a notebook computer or a palmtop computer) with a wireless communication function, a mobile internet device (mobile internet device, MID), a virtual reality (virtual reality, VR) terminal, an augmented reality (augmented reality, AR) terminal, a smartwatch, a smart band, smart glasses, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, another processing device connected to wireless modems, a terminal in an internet of things (internet of things, IoT) system, a desktop computer, UE defined in 3rd generation partnership project (3rd generation partnership project, 3GPP) standard specifications, or the like. This is not limited.

### 2. WebRTC

WebRTC is a real-time communication technology, which allows network applications or websites (or sites) to establish peer to peer (peer to peer, P2P) connections between browsers without using intermediate media, to implement transmission of audio streams, video streams, or any data other than the audio streams and the video streams. Transmission of the audio streams and/or the video streams may be performed via a media channel, and transmission of the data may be performed via a data channel (data channel, DC). The data channel may be referred to as a WebRTC data channel.

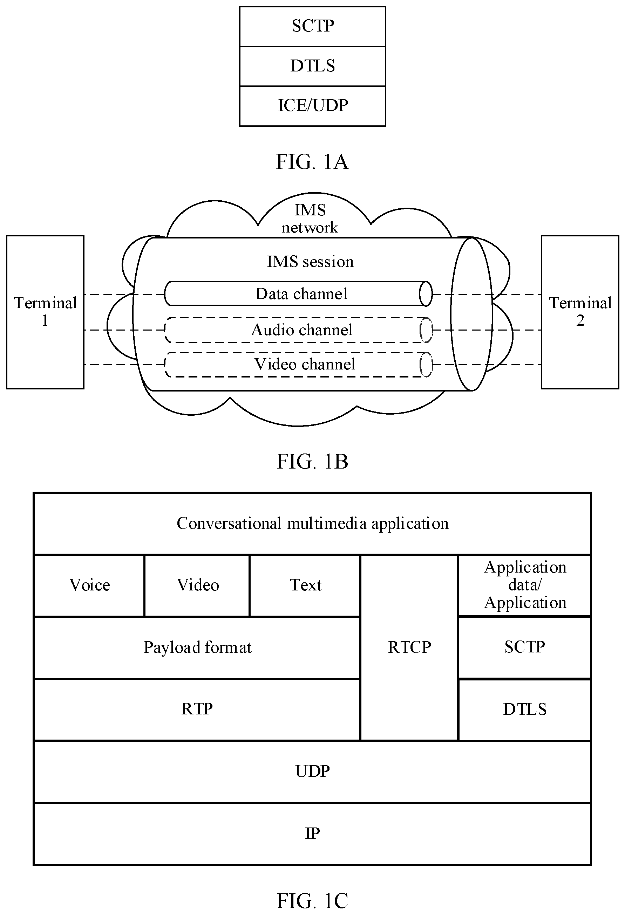

The WebRTC data channel is a channel created by a WebRTC user agent for transferring any data other than audio and video between browsers. The WebRTC data channel may use a stream control transmission protocol (stream control transmission protocol, SCTP), datagram transport layer security (datagram transport layer security, DTLS), and a user datagram protocol (user datagram protocol, UDP) as bearer protocols, and use interactive connectivity establishment (interactive connectivity establishment, ICE) to achieve network address translation (network address translation, NAT) traversal, so that both communication parties perceive internet protocol (Internet Protocol, IP) addresses and ports of each other. For example, a protocol stack of the WebRTC data channel may be shown in FIG. 1A. The SCTP is a connection-oriented transmission protocol, and its connection may be referred to as an association (association). One SCTP association may include a plurality of unidirectional streams (streams). The streams are independent of each other and are marked by stream identifiers (stream IDs). It may be understood that each stream may be for sending data without being affected by another stream. In other words, the WebRTC data channel is essentially two streams in different directions on one SCTP association. The two streams may use a same stream ID.

To perform transmission of data other than audio and video streams in an IMS network, the 3rd generation partnership project (3rd generation partnership project, 3GPP) introduces data channels for the IMS network, referred to as IMS data channels (IMS data channels, IMS DCs). The IMS network is an IP bearer-based open system that provides various multimedia services for users. All the data channels described in the following embodiments of this application are IMS data channels. To better understand the IMS data channel, a call service and an IMS session (IMS session) that are related to the IMS data channel are described first.

### 3. Call service

The call service is a service in which a terminal as a calling party or a called party participates in a voice call or a video call with one or more other terminals via a communication network (for example, an IMS network). In terms of time, the call service may cover an entire process from the start of dialing to the end of the call, or may cover a part of the process from the start of the dialing to the end of the call, for example, a process from parties that participate in the call service entering a call state to the end of the call. The call service may be a one-to-one call service, or may be a one-to-many (for example, conference) call service. In this application, the one-to-one call service is used as an example, but all related solutions may be applied to the one-to-many call service.

### 4. IMS session

In this application, the IMS session is a session that is established between persons, between persons and things, or between things and used for multimedia communication, and is used for transmission of multimedia data between communication parties, for example, data between terminals, and/or data between a terminal and a communication network. The IMS session may be understood as a logical connection between communication apparatuses in multimedia communication, for example, may be understood as a logical connection between terminals in multimedia communication, and may be used for transmission of data between the terminals; or may be understood as a logical connection between a terminal and a communication network in multimedia communication, and is used for transmission of data between the terminal and the communication network. In a specific application, the IMS session may be negotiated (or established) according to an SIP/SDP. It should be understood that the IMS session may also be replaced with a communication session, an IMS communication session, a session, a session of a call service, or the like. This is not limited.

It may be understood that multimedia communication may correspond to at least one IMS session. Multimedia communication between a terminal 1 and a terminal 2 is used as an example. The multimedia communication corresponds to one IMS session, for example, an IMS session between the terminal 1 and the terminal 2. Multimedia communication between a terminal 1, a terminal 2, and a terminal 3 is used as an example. The multimedia communication corresponds to one IMS session, for example, an IMS session between the terminal 1, the terminal 2, and the terminal 3. Alternatively, the multimedia communication corresponds to three IMS sessions, for example, an IMS session between the terminal 1 and the terminal 2, an IMS session between the terminal 1 and the terminal 3, and an IMS session between the terminal 2 and the terminal 3.

It may be understood that, for transmission of various types of data, channels for transmission of corresponding types of data may be established in an IMS session. For example, channels may be classified into media channels and data channels based on data types. In some scenarios, the media channels may be further classified into audio channels and video channels. The audio channel may be used for transmission of voice, the video channel may be used for transmission of video, and the data channel may be used for transmission of any data other than voice and video. Certainly, the data channel may also be used for transmission of voice and/or video. This is not limited.

For example, in FIG. 1B, a terminal 1 and a terminal 2 may communicate with each other via an IMS network, and an IMS session between the terminal 1 and the terminal 2 includes a data channel, an audio channel, and a video channel. It should be understood that FIG. 1B shows merely an example of the IMS session. In a specific application, the IMS session may include the data channel, but not include the audio and video channels; or the IMS session includes the data channel and at least one of the audio channel and the video channel. This is not limited.

### 5. Protocol stack of an IMS session

The protocol stack of the IMS session indicates a sum of media transfer protocols applicable to the IMS session, and may reflect a data transmission process in the IMS session. The IMS session may be used for transmission of voice, video, text, and data other than voice, video, and text. Therefore, to match transmission requirements of different types of data, different protocols may be configured for channels of different types of data. For example, the protocol stack of the IMS session may be shown in FIG. 1C. In FIG. 1C, a lowest-layer protocol for an audio channel, a video channel, and a data channel is an IP, and a UDP is over the IP. For the foregoing channels, protocols over the UDP are different. The following separately provides description. For the audio channel or the video channel, a real-time transport protocol (real-time transport protocol, RTP) or an RTP control protocol (RTP control protocol, RTCP) is over the UDP. Voice, video, or text payloads (payloads) may be encapsulated in the RTP, and then conversational multimedia applications (conversational multimedia applications) are over the RTP. Conversational multimedia applications are also over the RTCP. For the data channel, a DTLS protocol is over the UDP, and an SCTP is over the DTLS protocol. Information, for example, application data or applications, that can be transmitted via the data channel can be encapsulated in the SCTP. Conversational multimedia applications are over the application data or the applications.

It may be understood that FIG. 1C is merely an example of the media transfer protocol stack of the IMS session. In a specific application, the protocol stack of the IMS session may alternatively be in another form. For example, the protocol stack of the IMS session may not include the DTLS protocol.

### 6. Data channel

Unless otherwise specified, all the data channels described in the following embodiments of this application are data channels in IMS networks, namely, IMS data channels. The data channel is associated with an IMS session of a terminal, in other words, the data channel is created during the IMS session of the terminal, and may be used for transmission of application data or applications (for generating/consuming application data) related to the terminal during the IMS session.

For example, the data channels in embodiments of this application may be classified into at least the following types based on relationships between the data channels and audio/video calls.
(1) During an IMS session, when there is an audio call or a video call between the terminal and another session participant (which may be another terminal or a network element on a network side), and there is also a data channel, the data channel may be referred to as an auxiliary data channel (auxiliary data channel) or a dependent data channel (dependent data channel).
(2) During an IMS session, when there is a data channel between the terminal and another session participant, and there is no conventional voice call or video call, the data channel may be referred to as a standalone data channel (standalone data channel) or an independent data channel (independent data channel).

Both the auxiliary data channel and the standalone data channel may be used for transmission of any type of application data or application between session participants.

For example, application data transmitted via the data channel may be interactive application data (interactive application data), which is briefly referred to as interactive data (interactive data). The interactive application data may be application data used to support interactive operations (for example, data or code/scripts used to generate a graphical user interface (graphical user interface, GUI), where the GUI allows users to perform interactive operations, for example, a "like" button or a "red envelope" button); may be application data generated by performing the interactive operations (for example, control instructions, control signals, or output files generated after session participants perform interactive operations, for example, a quantity of "likes" or an amount of money in a "red envelope"); or may be data collected or stored by the terminal, for example, data collected by the terminal through an input/output (input/output, I/O) module, for example, images or video captured by a camera, voice captured by a microphone, text, symbols, or emojis input via a keyboard, or data generated by actions such as tapping/sliding on a touchscreen.

For example, application data transmitted via the data channel may alternatively be communication enhancement application data (communication enhancement application data), which is briefly referred to as communication enhancement data (communication enhancement data). The communication enhancement data may be data generated based on content of audio calls or video calls, for example, voice in the audio calls or the video calls is converted into text, or sign language in the video calls is converted into text or voice; may be data superimposed based on the audio calls or the video calls, for example, AR special effect pictures; or may be data independent of the audio calls or the video calls, for example, geographical location data or screen sharing data.

For example, application data transmitted via the data channel may alternatively be remote control commands. In this case, remote control services or remote IoT device connection services may be provided for users. It may be understood that, in the foregoing case, the data channel may also be used for transmission of the remote control commands.

For example, applications transmitted via the data channel may be installation packages, executable code, or scripts of the applications. The application may be an interactive enhancement application or a communication enhancement application, used to enhance interaction effects or communication effects of conventional voice calls or video calls, or may be a remote control application or an IoT communication application. This is not limited in embodiments of this application.

In some scenarios, based on different uses, auxiliary data channels or standalone data channels may be classified into bootstrap data channels (bootstrap data channels, BDCs) and application data channels (application data channels, ADCs). In this application, the BDC is used by terminals to obtain applications, for example, obtain data channel applications (DC apps), from data channel servers (data channel servers, DCSs). The ADC is configured for transmission of application data, for example, for transmission of interaction data or application data generated by data channel applications run by both communication parties. It may be understood that, the application transmitted via the BDC may logically control sending or receiving of application data on the ADC. A value of a stream ID of the BDC is less than 1000, and a value of a stream ID of the ADC is greater than or equal to 1000.

### 7. Data channel application

The data channel application may be used for transmission of application data via a data channel between a plurality of terminals in a same call service. For example, the data channel application includes at least one of the following: hypertext markup language (hypertext markup language, HTML), JavaScript scripts, pictures, or cascading style sheets (cascading style sheets, CSSs). The data channel application can describe a graphical user interface (user interface, UI) and implement interactive service logic. The data channel application may exist in a form of a web (web) page or may be run in a browser environment, for example, exist in a UI mode of an HTML web page, or may exist in a form of a mini application, a quick application, a light application, or the like.

The data channel application may transfer various data such as text, pictures, locations, and files via the data channel before and after a call is established, to implement real-time data exchange between two parties of the call, thereby greatly enhancing experience of the two parties of the call. A terminal 1 and a terminal 2 in a same call service are used as an example. If the terminal 1 wants to share its mobile phone screen with the terminal 2 during a call with the terminal 2, to guide the terminal 2 to perform mobile phone setting, the terminal 1 and the terminal 2 may separately obtain a data channel application used for screen sharing, and then separately run the data channel application to implement real-time data exchange with each other.

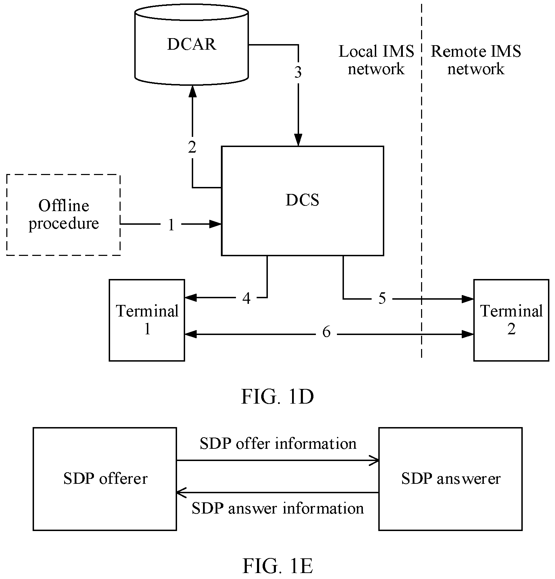

FIG. 1D is a diagram of obtaining a data channel application by a terminal 1 and a terminal 2. A specific process is as follows: 1. Developers complete development of a data channel application through an offline procedure, and then upload the developed data channel application to a DCS of an operator. 2. The DCS stores the data channel application in a data channel application repository (data channel application repository, DCAR). 3. The DCS downloads the data channel application from the DCAR as required. 4. The terminal 1 establishes a BDC with the DCS, and obtains the required data channel application from the DCS via the BDC. 5. The terminal 2 establishes a BDC with the DCS, and obtains the required data channel application from the DCS via the BDC. 6. The terminal 1 and the terminal 2 establish an ADC, used for transmission of interaction data of the data channel application.

It may be understood that the data channel does not concern content and communication formats that are transmitted via the data channel, but both communication parties need to agree on the communication formats. With internet technologies, such as (hypertext markup language, HTML)5 interfaces+JavaScript scripts (for example, web applications), diversified application content can be transferred via the data channel, to support rapid innovation, rapid deployment, and rapid launch of call services.

To enable all parties of an IMS session to agree on communication formats, for example, a media type and/or an encoding scheme, media negotiation may be performed during establishment of the IMS session, for example, media negotiation may be performed according to an SDP. SDP is used for transferring session messages to session participants. SDP defines a uniform format of session description. The following describes session description information defined in SDP.

### 8. Session description information

In this application, the session description information includes session information and media description information. For example, the session information may indicate a session name, a connection of the session, active time of the session (for example, start time and end time of the session), and information about a session owner. The media description information may indicate a media type, a transfer protocol, and a media format. For an IP multicast session, the media description information further indicates a multicast address and a media transmission port. For an IP unicast session, the media description information further indicates a remote address, of media and a transmission port, used for a contact address, and the like.

For example, content included in the session description information may be shown in Table 1. "v=0" to "t=2873397496 2873404696" in Table 1 belong to information about a session. Content after "t=2873397496 2873404696" belongs to media description information. For example, content included from one "m=" to content before a next "m=" belongs to one piece of media description information. "v=0" indicates a protocol version. "o=mhandley 2890844526 2890842807 IN IP4 126.16.64.4" indicates information about a session owner, for example, a name of the session initiator (mhandley), a session identifier (2890844526) of the calling party, a session version (2890842807) of the calling party, a network type (IN) of the calling party, an address type (IP4), and an IP address (126.16.64.4) of the session initiator. "s=SDP Seminar" indicates a name of the session. "c=IN IP4 224.2.17.12/127" indicates a connection of the session, and is an IP address used by a media stream. "t=2873397496 2873404696" indicates start time and end time of the session. "m=application 10001 UDP/DTLS/SCTP webrtc-datachannel" is media description of a data channel, and may indicate a media type (m=application), a UDP port number

(10001), a transfer protocol (UDP/DTLS/SCTP), and a supported payload type (webrtc-datachannel). "c=IN IP4 192.0.2.1" indicates media-level connection information. "a=sctp-port: 57483" indicates an SCTP port number (57483). "a=setup:actpass" indicates a role of a local endpoint during DTLS negotiation (which can initiate a DTLS link establishment request, and also can receive a DTLS link establishment request). "a=fingerprint:SHA-1\4A:AD:B9:B1:3F:82:18:3B:54:02:12:DF:3E:5D:49:6B:19:E5:7C:AB" indicates a certificate fingerprint signature used by DTLS. "a=tls-id:abc3de65cddef001be82" indicates a DTLS port number. "a=dcmap:1001 subprotocol="bfcp";label="bfcp"" indicates a data channel, where "bfcp" indicates a name of an application layer protocol used by a data channel application for transmission of data via the data channel.

**Table 1**

| |
|---|
| ``` v=0 o=mhandley 2890844526 2890842807 IN IP4 126.16.64.4 s=SDP Seminar c=IN IP4 224.2.17.12/127 t=2873397496 2873404696 ... m=application 10001 UDP/DTLS/SCTP webrtc-datachannel c=IN IP4 192.0.2.1 a=sctp-port: 57483 a=setup:actpass a=fingerprint: SHA- 1\4A:AD:B9:B1:3F:82:18:3B:54:02:12:DF:3E:5D:49:6B:19:E5:7C:AB a=tls-id:abc3de65cddef001be82 ``` |
| ``` a=dcmap:1001 subprotocol="bfcp";label="bfcp" ... ``` |

### 9. SDP offerer (SDP offerer) and SDP answerer (SDP answerer)

To negotiate SDP parameters, for example, the foregoing media description information, to be used by IMS session participants, an SDP offerer and an SDP answerer are introduced. The SDP offerer is a party that wants to create or modify an IMS session, and the SDP answerer is a party that responds to the SDP offerer. As shown in FIG. 1E, an SDP offerer may send SDP offer information (SDP Offer). The SDP offer information may include a group of media streams and encoding schemes that the SDP offerer expects to use, and an IP address and a port number used by the SDP offerer to receive and send media streams. For example, the SDP offer information may include the content shown in Table 1. An SDP answerer receives the SDP offer information and sends SDP answer information. The SDP answer information may indicate whether to accept the media stream and the encoding scheme in the SDP offer information, and an IP address and a port number used by the SDP answerer to send and receive media stream.

In conclusion, the SDP offerer and the SDP answerer may determine, through an SIP/SDP media negotiation procedure, the IP addresses and ports used by both parties for data transmission and media information corresponding to data channels, to establish one or more data channels in an IMS session. The SDP offerer and the SDP answerer are two terminals in a same IMS session; the SDP offerer is a terminal in an IMS session, and the SDP answerer is a network device, for example, an IMS application server (application server, AS), in a communication network; or the SDP offerer is a network device in a communication network, and the SDP answerer is a terminal in an IMS session.

### 10. WebRTC user agent

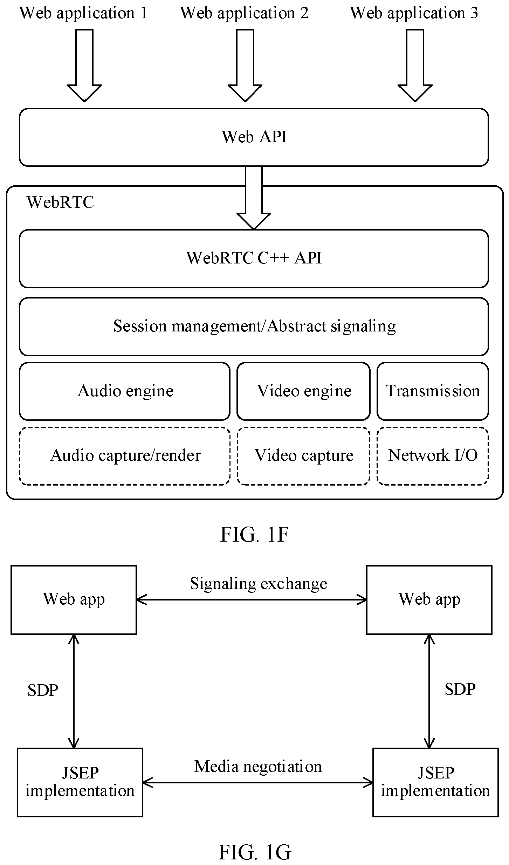

The WebRTC user agent may be deployed on terminals for media negotiation. FIG. 1F is a diagram of an architecture of a WebRTC user agent. The WebRTC user agent may open APIs to web application developers through a web application programming interface (application programming interface, API) layer. Therefore, web application developers do not need to care about complex underlying technologies. Instead, they can develop web applications by understanding basic principles of WebRTC. A web application is software that is run in a web browser. A standard browser may be used as a client. For example, a web application is an HTML web page, which is usually written in a hybrid form of HTML5, CSS, and JavaScript. A WebRTC C++ API layer provides APIs for browsers to support WebRTC specifications. The main function is to expose core WebRTC functions, such as device functions and audio/video stream data collection, so that browser vendors can integrate them into their own applications. PeerConnection is the most core module of the WebRTC C++ API layer, and is configured to implement functions such as P2P NAT traversal, communication link establishment and selection, stream data transmission, non-audio/video data transmission, and transmission quality reporting and counting. A session management (session management)/abstract signaling (abstract signaling) layer is a session (session) layer of WebRTC, and is configured to provide session function management functions, for example, may create sessions, manage sessions, and manage context environments. This layer also relates to various protocols, such as an SDP protocol of a signaling server, and is mainly used for signaling exchange and connection status management of the RTCPeerConnection. A voice engine (voice engine) module, a video engine (video engine) module, and a transport (transport) module are located at an engine layer and are configured for voice/video processing and file transmission. An audio capture/render (audio capture/render) module, a video capture (video capture) module, and a network I/O (network I/O) module are located at a driver layer, and may transmit captured audio/video to the engine layer for further processing.

### 11. WebRTC signaling model

WebRTC may use an SDP to perform media negotiation, for example, exchange SDP parameters by using SDP offer information and SDP answer information. A protocol specifies that a WebRTC JavaScript application (a web app) controls a multimedia session signaling plane through an interface (for example, the Web API in FIG. 1F) specified in the W3C API, and assumes that the WebRTC JavaScript application is run in a running environment including a WebRTC API. In addition, WebRTC focuses more on a media plane, and the signaling plane is reserved for applications as much as possible. For example, the WebRTC signaling model may be shown in FIG. 1G. In FIG. 1G, web apps may exchange signaling with each other (for example, send app specific signaling), and a JavaScript session establishment protocol (JavaScript session establishment protocol, JSEP) implementation (for example, which may correspond to the session management/abstract signaling layer in FIG. 1F) may be responsible for maintaining a signaling state machine, to indicate a media negotiation state during media negotiation. The JSEP implementation provides interfaces required by the web apps. The web apps can drive the signaling state machine by invoking APIs at correct time. In the JSEP implementation, an SDP is created based on information provided by the web apps, including media types, formats, and all related media configuration parameters required for media path establishment, and negotiated local session description and remote session description are processed. Different web apps may use different protocols at a signaling layer, for example, may use standard signaling protocols (for example, an SIP) or self-defined signaling protocols, to exchange media description information with peer web apps. For example, the JSEP implementation is an implementation of WebRTC injected into a browser, and provides a JS API (corresponding to the Web API in FIG. 1F) for web apps. A web app is an application that is run in a browser, and invokes the JS API to implement functions such as network video chat.

### 12. Process of SDP exchange in WebRTC

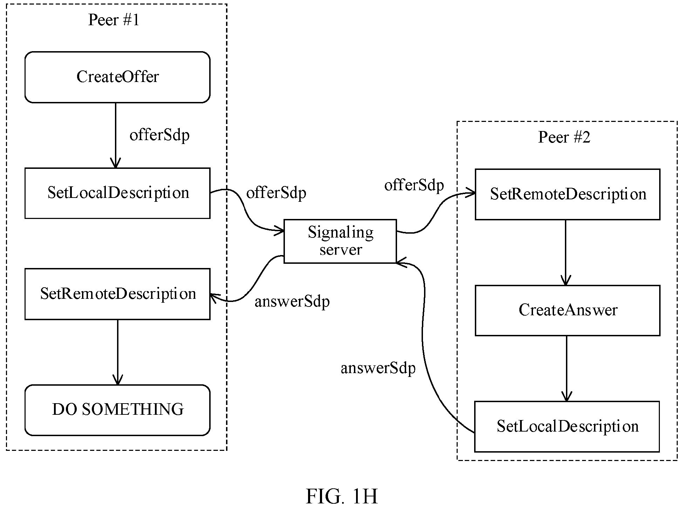

FIG. 1H shows a process of SDP exchange in WebRTC by using a peer #1 and a peer #2 as an example. Specifically, in WebRTC, the RTCPeerConnection class may be used to create connections, where the class contains two SDP generation methods: CreateOffer() and CreateAnswer(). The former is invoked by a session initiator (for example, the peer #1) to generate offerSdp and send the offerSdp to a signaling server (signaling server). After a session answerer (for example, the peer #2) receives the offerSdp, the latter is invoked to generate answerSdp. The answerSdp may be subsequently sent to the session initiator through the signaling server. The RTCPeerConnection also contains two SDP setting methods: SetLocalDescription() and SetRemoteDescription(). The former is used to set a local SDP (namely, localSdp), and the latter is used to set a received peer SDP (namely, remote). For a session initiator, localSdp is offerSdp, and remoteSdp is answerSdp. For a session answerer, localSdp is answerSdp, and remoteSdp is received offerSdp. An ordered combination of the foregoing four methods may constitute a process of SDP exchange between WebRTC devices. Actually, this is also a negotiation process, because a session answerer needs to determine, according to an SDP (for example, ICE server information and audio/video encoding information) provided by an initiator, how to reply.

### 13. Media negotiation of a WebRTC data channel

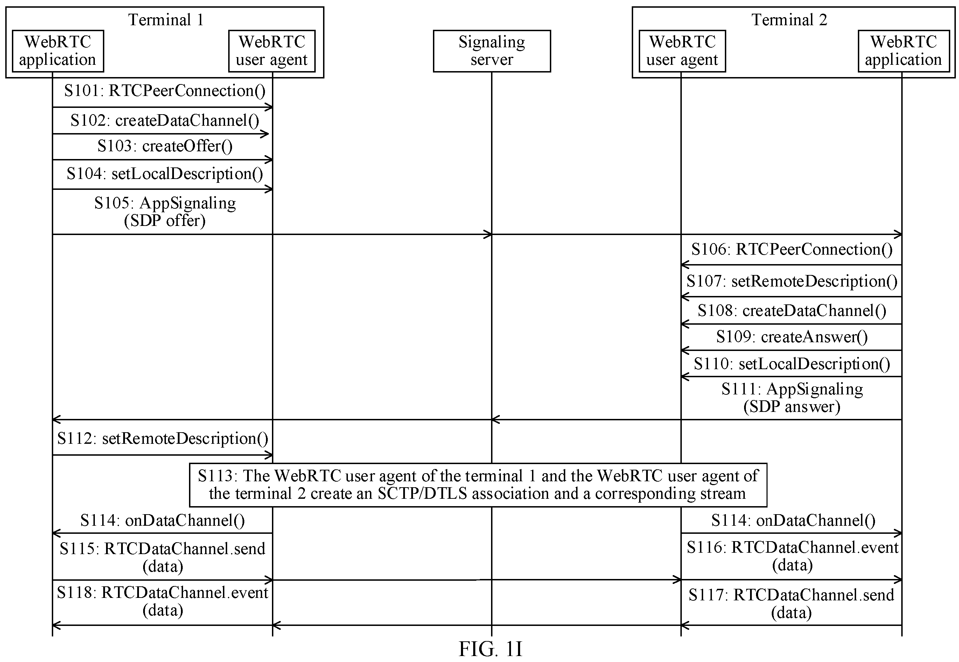

A WebRTC application can invoke an RTCPeerConnection API to implement media negotiation of a WebRTC data channel. The following uses an example in which a terminal 1 (a calling terminal) and a terminal 2 (a called terminal) negotiate a WebRTC data channel for description. As shown in FIG. 1I, a media negotiation process of a WebRTC data channel may include the following steps.

S101: A WebRTC application of the terminal 1 invokes an RTCPeerConnection API to request a WebRTC user agent (which may also be replaced with a JSEP implementation) of the terminal 1 to create an RTCPeerConnection instance.

It may be understood that, when the terminal 1 starts the WebRTC application and needs to perform media negotiation, the terminal 1 initiates media negotiation, for example, invokes the RTCPeerConnection API. A new RTCPeerConnection instance created by the WebRTC user agent represents a connection between the terminal 1 and the terminal 2.

It may be understood that RTCPeerConnection corresponds to an SDP session level, and one RTCPeerConnection instance corresponds to one SCTP association. For example, one RTCPeerConnection instance may correspond to media description of one data channel in an SDP. The media description of the data channel includes content from one "m=application..." to content before a next "m=...".

S102: The WebRTC application of the terminal 1 invokes a createDataChannel method to request to create a WebRTC data channel on the RTCPeerConnection instance (or object).

It may be understood that, the createDataChannel method may further carry information related to the WebRTC data channel, for example, a label (label) of the WebRTC data channel. Optionally, the createDataChannel method may further carry a parameter of the WebRTC data channel, for example, one or more of reliable, ordered, maxRetransmitTime, maxRetransmits, protocol, negotiated, or id. reliable, ordered, maxRetransmitTime, and maxRetransmits may indicate whether transmission is reliable, how to perform retransmission if the transmission is unreliable, whether packets need to arrive in order, and the like. protocol indicates a sub-protocol used for data transmission via the WebRTC data channel, and the sub-protocol is transparent to WebRTC. negotiated and id indicate whether negotiation is performed by using out-of-band data or data transmitted via the WebRTC data channel. For example, when negotiated is true, it indicates that out-of-band data negotiation is performed according to an SDP. In this case, id may provide a valid SID value. When negotiated is false, it indicates that during establishment of the WebRTC data channel, an Open message is sent for in-band negotiation after a bottom-layer channel link is established.

It may be understood that, if the createDataChannel method does not carry the parameter of the WebRTC data channel, the WebRTC user agent may set the parameter to a default value or select a group of parameters for the WebRTC data channel.

It may be understood that WebRTC data channels on a same RTCPeerConnection instance may share a same SCTP association, or WebRTC data channels on a same RTCPeerConnection RTCPeerConnection correspond to media description of a same WebRTC data channel (for example, a same line m). Therefore, all WebRTC data channels created by the WebRTC user agent on the RTCPeerConnection instance can share one SCTP association. In other words, each time the WebRTC user agent creates a WebRTC data channel on the RTCPeerConnection instance, a new WebRTC data channel is created on the SCTP association corresponding to the RTCPeerConnection instance. For example, one SCTP stream is added, and the SCTP Stream may correspond to an "a=dcmap" attribute line under line m.

For example, the WebRTC application has created a WebRTC data channel through an RTCPeerConnection instance, and media description of the WebRTC data channel is shown in Table 1 (for example, including content from "m=application 10001 UDP/DTLS/SCTP webrtc-datachannel" to "a=dcmap:1001 subprotocol="bfcp";label="bfcp""). If the WebRTC application creates another WebRTC data channel on the RTCPeerConnection instance, the newly created WebRTC data channel and the previous WebRTC data channel share a same SCTP association, and an attribute line "a=dcmap" may be added after "a=dcmap:1001 subprotocol="bfcp";label="bfcp"" to obtain media description shown in Table 2.

**Table 2**

| |
|---|
| ``` ... m=application 10001 UDP/DTLS/SCTP webrtc-datachannel c=IN IP4 192.0.2.1 a=sctp-port: 57483 a=setup:actpass a=fingerprint: SHA- 1\4A:AD:B9:B1:3F:82:18:3B:54:02:12:DF:3E:5D:49:6B:19:E5:7C:AB a=tis-id:abc3de65cddef001be82 a=dcmap:1001 subprotocol="bfcp";label="bfcp" a=dcmap:2001 subprotocol="msrp";label="msrp" ... ``` |

S103: The WebRTC application of the terminal 1 invokes a createOffer method, and requests the WebRTC user agent of the terminal 1 to generate new SDP description and return the new SDP description to the WebRTC application.

It may be understood that the WebRTC user agent further adds the SDP description to the RTCPeerConnection. The SDP description is media information that needs to be negotiated with the terminal 2. The SDP description includes session description information, and for example, may be shown in Table 3.

**Table 3**

| |
|---|
| ``` v=0 o=mhandley 2890844526 2890842807 IN IP4 126.16.64.4 s=SDP Seminar c=IN IP4 224.2.17.12/127 t=2873397496 2873404696 ... m=application 10001 UDP/DTLS/SCTP webrtc-datachannel c=IN IP4 192.0.2.1 a=sctp-port: 57483 a=setup:actpass a=fingerprint: SHA- 1\4A:AD:B9:B1:3F:82:18:3B:54:02:12:DF:3E:5D:49:6B:19:E5:7C:AB a=tls-id:abc3de65cddef001be82 a=dcmap:1001 subprotocol="bfcp";label="bfcp" ``` |
| ``` a=dcmap:2001 subprotocol="msrp";label="msrp" ``` |

S104: The WebRTC application of the terminal 1 invokes a setLocalDescription API to trigger the WebRTC user agent of the terminal 1 to parse the SDP description and create a local resource for receiving and decoding media.

It may be understood that the WebRTC user agent of the terminal 1 may trigger sending parameter setting for the WebRTC data channel, to trigger creation of SCTP streams, data source setting, and the like.

S105: The WebRTC application of the terminal 1 sends an SDP offer to a WebRTC application of the terminal 2 through a signaling server by using a signaling mechanism (for example, an SIP). Correspondingly, the WebRTC application of the terminal 2 receives the SDP offer.

It may be understood that the SDP offer may include the foregoing SDP description.

S106: The WebRTC application of the terminal 2 invokes the RTCPeerConnection API, to enable a WebRTC user agent of the terminal 2 to create an RTCPeerConnection instance.

S107: The WebRTC application of the terminal 2 invokes a setRemoteDescription API to apply the received SDP offer, parses the SDP offer, and configures a local resource for sending and encoding.

S108: The WebRTC application of the terminal 2 creates an RTCDataChannel object on a local RTCPeerConnecton object. For example, the WebRTC application of the terminal 2 invokes the createDataChannel method to create a WebRTC data channel on the RTCPeerConnection object.

S109: The WebRTC application of the terminal 2 invokes a createAnswer API to generate an SDP answer.

The SDP answer may include media related to a connected session and a coder/decoder supported by a browser.

S110: The WebRTC application of the terminal 2 invokes the setLocalDescription API to set a local SDP, so as to configure a local resource for receiving and decoding.

S111: The WebRTC application of the terminal 2 returns the SDP answer to the WebRTC application of the terminal 1 through the signaling server. Correspondingly, the WebRTC application of the terminal 1 receives the SDP answer.

S112: The WebRTC application of the terminal 1 invokes the setRemoteDescription API to set a remote SDP, so as to configure a local resource for sending and encoding. The initial setting is complete.

S113: The WebRTC user agent of the terminal 1 and the WebRTC user agent of the terminal 2 create an SCTP/DTLS association and a corresponding stream thereof.

S114: The WebRTC user agent of the terminal 1 notifies, by using an onDataChannel() event, that creation of a WebRTC application connection of the terminal 1 is complete, and the WebRTC user agent of the terminal 2 notifies, by using the onDataChannel() event, that creation of a WebRTC application connection of the terminal 2 is complete.

S115 to S118: The WebRTC application of the terminal 1 and the WebRTC application of the terminal 2 send media data through a send() interface, and notify, by using an onmessage() event, the peer end to receive the media data.

### 14. Media negotiation of an IMS data channel

Communication apparatuses (for example, a calling terminal and a called terminal, or a terminal and a network side) in a same IMS session may determine, through an IMS SIP/SDP media negotiation procedure, IP addresses and ports used by both parties for transferring data, used communication protocols, parameters required by a transport layer, and description information corresponding to an IMS data channel, so as to establish one or more IMS data channels in the IMS session.

It may be understood that a data channel application may create an IMS data channel through a WebRTC API. Therefore, a media negotiation process of the IMS data channel is similar to a media negotiation process of a WebRTC data channel. Negotiation of an IMS data channel between a terminal 1 (a calling terminal) and a terminal 2 (a called terminal) is used as an example. The terminal 1 and the terminal 2 may first negotiate a BDC, and download a data channel application via the BDC. Subsequently, the terminal 1 and the terminal 2 run the data channel application. If a user of the terminal 1 triggers the terminal 1 to initiate media negotiation, the data channel application of the terminal 1 may sequentially invoke an RTCPeerConnection API, a createDataChannel method, a createOffer method, and a setLocalDescription API to obtain an SDP offer (for details, refer to corresponding description in S101 to S104). Subsequently, the terminal 1 may include the SDP offer in an SIP request, for example, an invite request (INVITE), an update request (UPDATE), or a re-invite request (re-INVITE), and route the request to the terminal 2 via an IMS network. After obtaining the SDP offer, the terminal 2 sequentially invokes the RTCPeerConnection API, a setRemoteDescription API, the createDataChannel method, a createAnswer API, and the setLocalDescription API to obtain an SDP answer (for details, refer to corresponding description in S106 to S110), includes the SDP answer in an SIP response, for example, an 18x response/a 200 OK response, and routes the response to the terminal 1 via the IMS network, so as to implement media negotiation of the IMS data channel.

It may be understood that, during creation of an IMS session, an initially generated SDP may be carried and sent via INVITE. Subsequently, if the SDP needs to be updated, an updated SDP may be carried in UPDATE. After the IMS session is created successfully, if the SDP needs to be updated, an updated SDP may be carried in re-INVITE.

In addition, media description of the IMS data channel is also similar to media description of the WebRTC data channel. For example, content included in the media description of the IMS data channel may be shown in Table 4.

**Table 4**

| |
|---|
| ``` c=IN IP4 192.0.2.156 ... m=application 10001 UDP/DTLS/SCTP webrtc-datachannel c= IN IP4 192.0.2.156 a=max-message-size: 1024 a=sctp-port: 57483 a=setup:actpass a=fingerprint:SHA-1 BC:8A:99:A0:E3:28:CA:B3:09:20:1B:FD:21:D5:AC:B6:F3:5E:45:AF a=tls-id: cd3bea56dced0f35d224 a=dcmap:7216 max-retr=5;label="low loss" ... ``` |

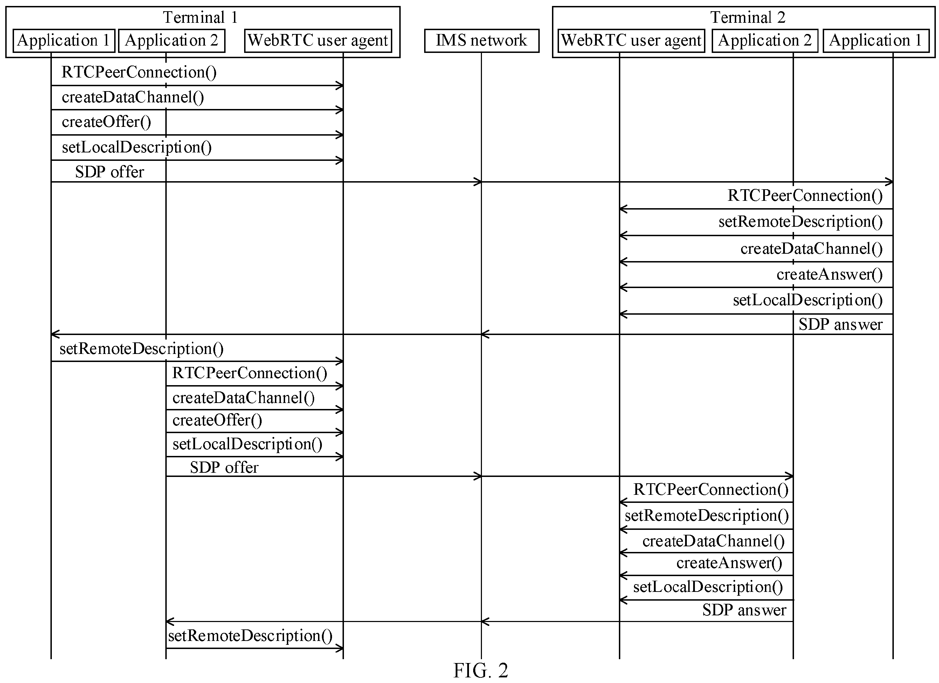

The above describes a process in which the data channel application triggers the negotiation of the IMS data channel. During actual application, an IMS session usually has a plurality of data channel applications. Therefore, the plurality of data channel applications may trigger negotiation of IMS data channels. An example in which a data channel application 1 (which is briefly referred to as an application 1) and a data channel application 2 (which is briefly referred to as an application 2) trigger negotiation of IMS data channels is used below for description. As shown in FIG. 2, the application 1 and the application 2 may use the method shown in FIG. 1I to negotiate the IMS data channels. Therefore, the two applications have their own session contexts, WebRTC user agents respectively create respective SCTP associations for the two applications, and the two applications respectively use different SCTP associations to send/receive data. For example, when the two applications separately invoke a createOffer method, the WebRTC user agents may respectively create SDPs shown in Table 5 for the two applications.

**Table 5**

| SDP of the application 1 | SDP of the application 2 |
|---|---|
| ... | ... |
| v=0 | v=0 |
| o=mhandley 2890844526 2890842807 IN | o=mhandley 2890844526 2890842807 IN IP4 |
| IP4 126.16.64.4 | 126.16.64.4 |
| s=SDP Seminar | s=SDP Seminar |
| t=2873397496 2873404696 | t=2873397496 2873404696 |
| m=application 10001 UDP/DTLS/SCTP | m=application 10001 UDP/DTLS/SCTP |
| webrtc-datachannel | webrtc-datachannel |
| c=IN IP4 192.0.2.1 | c=IN IP4 192.0.2.1 |
| a=sctp-port: 57483 | a=sctp-port: 57485 |
| a=setup:actpass | a=setup:actpass |
| a=fingerprint:SHA- | a=fingerprint:SHA- |
| 1\4A:AD:B9:B1:3F:82:18:3B:54:02:12:DF: | 1\4A:AD:B9:B1:3F:82:18:3B:54:02:12:DF:3E: |
| 3E:5D:49:6B:19:E5:7C:AB | 5D:49:6B:19:E5:7C:AB |
| a=tls-id:abc3de65cddef001be82 | a=tls-id:abc3de65cddef001be82 |
| a=mid:1 | a=mid:1 |
| a=dcmap:7216 max-retr=5;label="low loss" | a=dcmap:7384 max-retr=5;label="low latency" |
| ... | ... |

The foregoing method for creating the data channels for the plurality of data channel applications causes high resource overheads.

To resolve the foregoing problem, this application provides a communication method. In the method, after receiving a first request used to request to create a first data channel, a communication entity may determine whether a created connection (for example, an SCTP association) is capable of carrying the first data channel. If there is one or more created connection capable of carrying the first data channel, the communication entity indicates to use a first connection to carry the first data channel, where the first connection is a connection corresponding to the first data channel in the created connections. If there is no created connection capable of carrying the first data channel, the communication entity indicates to use a new connection to carry the first data channel, and creates the new connection.

In the foregoing process, before creating the data channel, the communication entity may determine, from the created connections, the connection capable of carrying the data channel. In other words, when the data channel is created according to the foregoing method, the created connection may be multiplexed, so that resource overheads can be reduced.

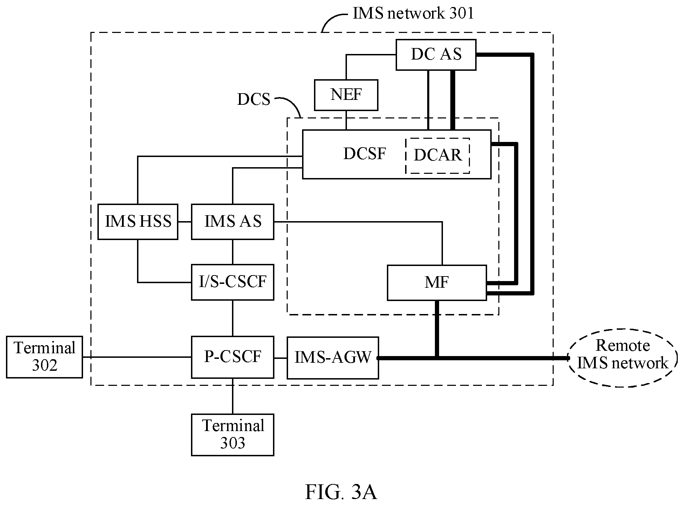

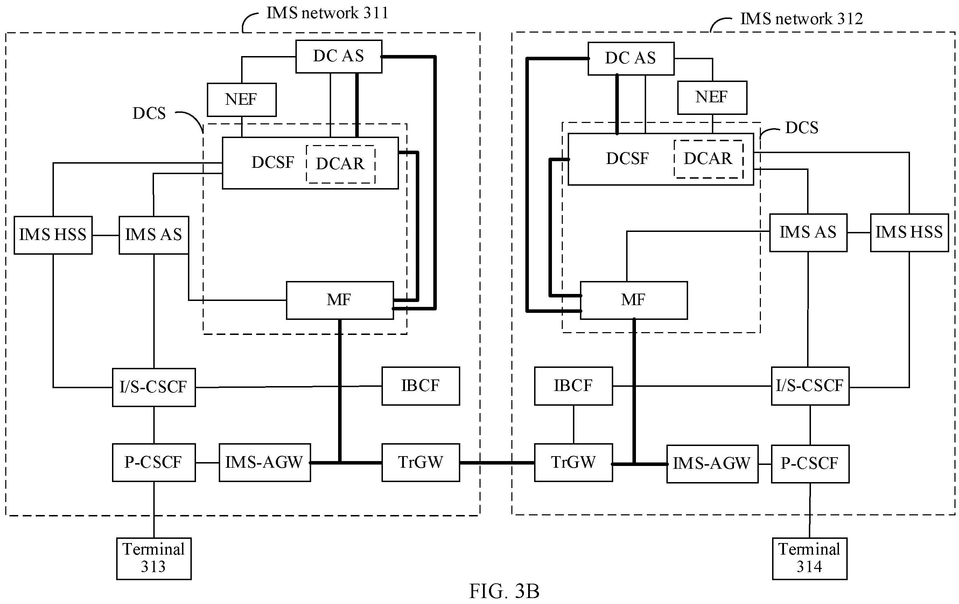

It may be understood that the method provided in this application may be applied to various communication systems. For example, the communication system may be a long term evolution (long term evolution, LTE) system, a 5G communication system, a wireless fidelity (wireless fidelity, Wi-Fi) system, a 3GPP-related communication system, an evolved communication system after 5G (for example, a 6th generation (6th generation, 6G) communication system), or a system integrating a plurality of systems. This is not limited. 5G may also be referred to as new radio (new radio, NR). The following describes the method provided in this application by using communication scenarios shown in FIG. 3A and FIG. 3B as examples. FIG. 3A and FIG. 3B are merely diagrams, and do not constitute limitations on applicable scenarios of the technical solutions provided in this application.

FIG. 3A and FIG. 3B are diagrams of communication scenarios to which this application is applicable. FIG. 3A shows a communication scenario in which a calling terminal and a called terminal are in a same IMS network. FIG. 3B shows a communication scenario in which a calling terminal and a called terminal are in different IMS networks. The following provides detailed description.

In FIG. 3A, a terminal 302 and a terminal 303 may communicate with each other via an IMS network 301. The IMS network 301 is a call originating network and a call terminating network. The terminal 302 is a calling terminal, and the terminal 303 is a called terminal. Alternatively, the terminal 302 is a called terminal, and the terminal 303 is a calling terminal. The IMS network 301 includes a data channel application server (DC AS), a network exposure function (network exposure function, NEF) entity and a DCS that are in communication connection with the DC AS, an IMS home subscriber server (home subscriber server, HSS) entity and an IMS AS that are in communication connection with the DCS, a call session control function (call session control function, CSCF) entity in communication connection with the IMS AS and the IMS HSS entity, and an IMS access media gateway (access media gateway, IMS-AGW) in communication connection with the CSCF entity.

The DCS may include a data channel signaling function (data channel signaling function, DCSF) entity and a media function (media function, MF) entity. Optionally, the DCS further includes a data channel application repository (data channel application repository, DCAR) entity. FIG. 3A shows that the DCSF and the DCAR are deployed on a same entity, and the MF is separately deployed on an entity. In a specific application, a deployment manner of the DCSF, the DCAR, and the MF is not limited. For example, the DCSF, the DCAR, and the MF may be separately deployed on different entities, or at least two of the DCSF, the DCAR, and the MF are deployed on a same entity.

The CSCF entity is a functional entity in the IMS, and is a core of the entire IMS. The CSCF entity is mainly responsible for processing signaling control in a multimedia call session process. The CSCF entity may manage user authentication of the IMS and quality of service (quality of service, QoS) on an IMS bearer plane, and cooperates with another network element to perform SIP session control, service negotiation, resource allocation, and the like. Based on different functions, the CSCF entity may be divided into a proxy CSCF (P-CSCF) entity, an interrogating CSCF (interrogating CSCF, I-CSCF) entity, a serving CSCF (S-CSCF) entity, and the like. FIG. 3A shows that the I-CSCF and the S-CSCF are deployed on a same entity, and the P-CSCF is separately deployed on an entity. In a specific application, a deployment manner of the I-CSCF, the S-CSCF, and the P-CSCF is not limited. For example, the I-CSCF, the S-CSCF, and the P-CSCF may be separately deployed on different entities, or at least two of the I-CSCF, the S-CSCF, and the P-CSCF are deployed on a same entity.

It may be understood that, in the communication scenario shown in FIG. 3A, the terminal 302 and the terminal 303 may negotiate, according to the method provided in this application, a data channel in an IMS session in which the terminal 302 and the terminal 303 participate. Alternatively, the terminal 302 and the IMS AS (or the DCSF entity) may negotiate, according to the method provided in this application, a data channel in an IMS session in which the terminal 302 and the IMS AS (or the DCSF entity) participate. Alternatively, the terminal 303 and the IMS AS (or the DCSF entity) may negotiate, according to the method provided in this application, a data channel in an IMS session in which the terminal 303 and the IMS AS (or the DCSF entity) participate. Alternatively, the terminal 302 and the DC AS may negotiate, according to the method provided in this application, a data channel in an IMS session in which the terminal 302 and the DC AS participate. Alternatively, the terminal 303 and the DC AS may negotiate, according to the method provided in this application, a data channel in an IMS session in which the terminal 303 and the DC AS participate.

In FIG. 3B, a terminal 313 and a terminal 314 may communicate with each other via an IMS network 311 and an IMS network 312. One of the IMS network 311 and the IMS network 312 is a call originating network, and the other is a call terminating network. For example, if the terminal 313 is a calling terminal, and the terminal 314 is a called terminal, the IMS network 311 is a call originating network, and the IMS network 312 is a call terminating network. If the terminal 313 is a called terminal, and the terminal 314 is a calling terminal, the IMS network 311 is a call terminating network, and the IMS network 312 is a call originating network. The IMS network 311 and the IMS network 312 include similar entities. For example, the IMS network 311 or the IMS network 312 includes a DC AS, an NEF entity and a DCS that are in communication connection with the DC AS, an IMS HSS entity and an IMS AS that are in communication connection with the DCS, a CSCF entity in communication connection with the IMS AS, an IMS-AGW and an interconnection border control function (interconnection border control function, IBCF) entity that are in communication connection with the CSCF entity, and a transition gateway (transition gateway, TrGW) in communication connection with the IMS-AGW. For description of the DCS and the CSCF entity, refer to corresponding description in FIG. 3A.

It may be understood that, in the communication scenario shown in FIG. 3B, the terminal 313 and the terminal 314 may negotiate, according to the method provided in this application, a data channel in an IMS session in which the terminal 313 and the terminal 314 participate. Alternatively, the terminal 313 and the IMS AS (or the DCSF entity) in the IMS network 311 may negotiate, according to the method provided in this application, a data channel in an IMS session in which the terminal 313 and the IMS AS (or the DCSF entity) in the IMS network 311 participate. Alternatively, the terminal 313 and the IMS AS (or the DCSF entity) in the IMS network 312 may negotiate, according to the method provided in this application, a data channel in an IMS session in which the terminal 313 and the IMS AS (or the DCSF entity) in the IMS network 312 participate. Alternatively, the terminal 314 and the IMS AS (or the DCSF entity) in the IMS network 312 may negotiate, according to the method provided in this application, a data channel in an IMS session in which the terminal 314 and the IMS AS (or the DCSF entity) in the IMS network 312 participate. Alternatively, the terminal 314 and the IMS AS (or the DCSF entity) in the IMS network 311 may negotiate, according to the method provided in this application, a data channel in an IMS session in which the terminal 314 and the IMS AS (or the DCSF entity) in the IMS network 311 participate. Alternatively, the terminal 313 and the DC AS may negotiate, according to the method provided in this application, a data channel in an IMS session in which the terminal 313 and the DC AS participate. Alternatively, the terminal 314 and the DC AS may negotiate, according to the method provided in this application, a data channel in an IMS session in which the terminal 314 and the DC AS participate.

To more clearly understand the communication scenarios provided in this application, the following specifically describes functions of various entities in FIG. 3A and FIG. 3B.

The DC AS may be configured to provide data channel service logic. In FIG. 3A or FIG. 3B, the DC AS is deployed in the IMS network, and may be directly connected to another entity in the IMS network through an interface (for example, a service-oriented interface). In a specific application, the DC AS may not be deployed in the IMS network, but is deployed outside the IMS network, and is connected to another network element in the IMS network through an NEF entity (or an IMS border network management system).

The NEF entity may be configured to securely open various services of a core network (for example, a 5G core network) to a third party.

The DCSF entity may provide a data channel signaling control function.

The DCAR may be configured to store data channel applications. For example, after developing a data channel application, developers upload the application to a DCS of an operator, and the DCS stores the application in a DCAR. When necessary, the DCS downloads the data channel application from the DCAR to the DCS locally for subsequent processing.

The IMS HSS entity may be responsible for storing IMS user subscription data.

The IMS AS is an application-layer device located at an uppermost layer of the IMS network, and provides various services, including IMS basic services and supplementary services, multimedia conferencing, merged communication, short message service gateways, and standard consoles. The IMS AS may interact with the CSCF entity to trigger and perform various network services. The IMS AS may negotiate the data channel with the terminal. For example, the IMS AS may be a multimedia telephony application server (multiMedia telephony application server, MMTEL AS) or a telephony application server (telephony application server, TAS).

The MF entity may be configured to provide a data channel media resource management function.

The S-CSCF entity may be responsible for IMS user registration, authentication, sessions, routing, service triggering, and the like.

The I-CSCF entity is a unified entry node to an IMS user home network, and may be responsible for allocating or querying an S-CSCF that serves users.

The P-CSCF entity is an ingress node for users to access the IMS network, and may be responsible for forwarding SIP signaling between IMS users and their home network.

The IMS-AGW may provide functions of an access gateway and a media gateway of the IMS network.

The IBCF entity may implement functions such as signaling interworking, topology hiding, and IP security protection for voice, video, and multimedia services.

The TrGW entity may implement functions of media interworking, topology hiding, and IP security protection for voice, video, and multimedia services. In addition, the TrGW entity further supports voice codec format conversion and other functions.

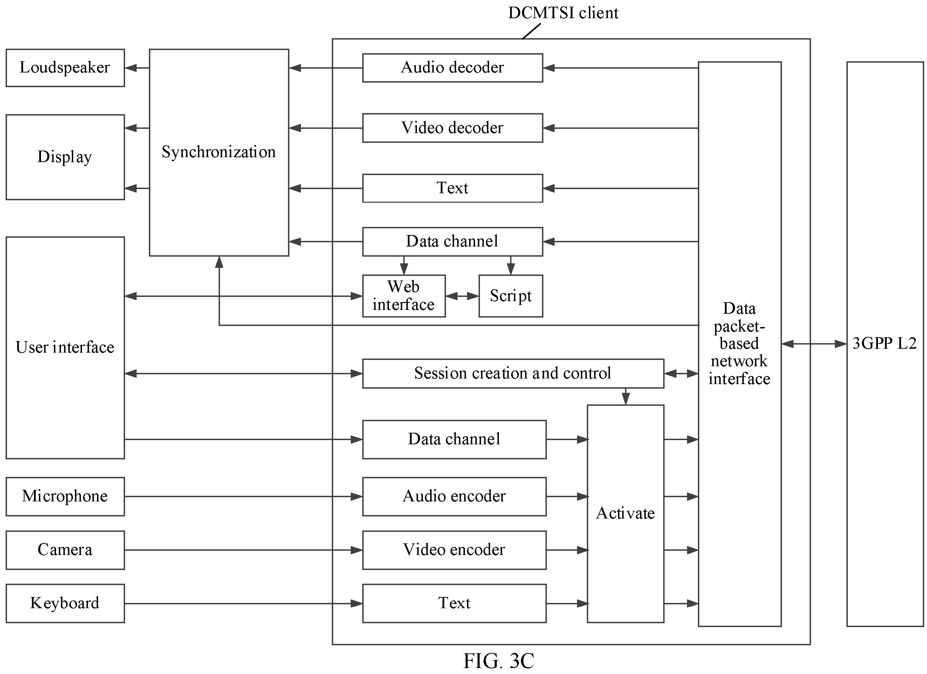

It may be understood that for description of the terminal, refer to the foregoing explanations and description of the technical terms in this application. In addition, because the terminal in this application supports the data channel, the terminal in this application may be deployed with a multimedia telephony service for IMS (multimedia telephony service for IMS, MTSI) client (MTSI client) that supports the data channel. The MTSI client that supports the data channel may also be referred to as a DCMTSI client. An architecture of the DCMTSI client may be shown in FIG. 3C.

In FIG. 3C, the DCMTSI client includes a data packet-based network interface, and an audio decoder, a video decrypter, text media (referred to as text media 1 below) for processing downlink data, a data channel module (referred to as a data channel module 1 below) for processing downlink data, a session creation and control module, a data channel module (referred to as a data channel module 2 below) for processing uplink data, an audio encoder, a video encoder, and text media (referred to as text media 2 below) for processing uplink data that are separately connected to the data packet-based network interface. The data packet-based network interface may be implemented by using the protocol stack in FIG. 1C.

The data packet-based network interface may communicate with a 3GPP network according to a 3GPP L2 protocol, and is configured for media transmission. The 3GPP L2 protocol includes a packet data convergence protocol (packet data convergence protocol, PDCP) or a service data adaptation protocol (service data adaptation protocol, SDAP). For example, the DCMTSI client may receive media data on a network side or send media data to the network side through the data packet-based network interface.

It may be understood that the audio encoder may encode sound captured by a microphone, and send encoded audio through the data packet-based network interface to another DCMTSI client for reception. After the another DCMTSI client receives the encoded audio, an audio decoder decodes the encoded audio and plays the sound through a loudspeaker. The video encoder may encode an image captured by a camera, and send an encoded image through the data packet-based network interface to the another DCMTSI client for reception. After the another DCMTSI client receives the encoded image, a video decoder decodes the encoded image and renders the image on a display. The text media 2 may obtain characters input on a keyboard or characters drawn on a screen, and send information about the characters through the data packet-based network interface to the another DCMTSI client for reception. After receiving the information about the characters, the another DCMTSI client may render the information about the characters on the display in real time. In addition, the encoded audio, the encoded image, and the character information may be sent through the data packet-based network interface after being activated. Activation is an operation performed for a pre-registered subscriber, and this operation enables the subscriber to enter a normal state and be able to start using services provided by the operator.

It may be understood that the audio decoder is configured to decode audio data received through the data packet-based network interface, and decoded audio may be played through the loudspeaker. The video decoder is configured to decode an image received through the data packet-based network interface and render the image on the display. The text media 1 is configured to process character information received through the data packet-based network interface, and processed characters may be rendered on the display in real time. It should be understood that the decoded audio, the decoded image, and the processed characters may be played or displayed after synchronization processing.

It may be understood that, for other data related to multimedia telephony sessions that is used for real-time interaction, no coder/decoder is required, and the data may be generated or consumed by the DCMTSI client. For example, the data may be processed by the data channel module 2 and then sent through the data packet-based network interface, or the data may be controlled by the data channel module 1 to play corresponding sound through the loudspeaker, display a corresponding image through the display, or present a corresponding effect on a user interface. In addition, the user interface may receive interaction data through a downlink data channel, interact with a web interface and related scripts, and need to synchronize with voice, video, and text data received by users, so as to process data channel I/O and data formatting.

It may be understood that, to enable the data channel application to be run between different terminals and/or different networks, the terminal needs to support a corresponding data channel logical architecture.

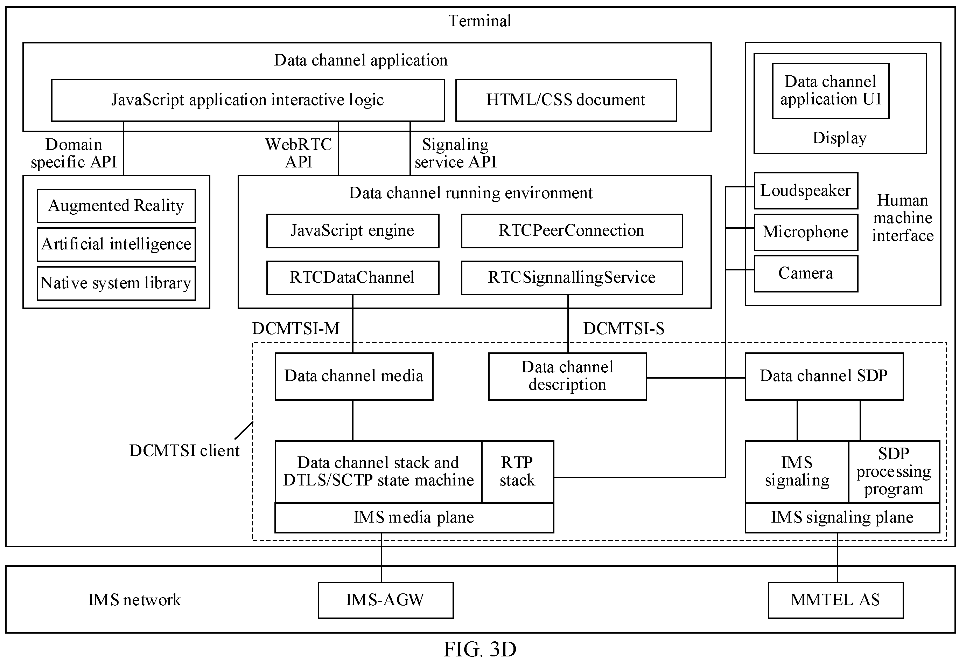

For example, FIG. 3D is a diagram of a data channel logical architecture supported by a terminal. In FIG. 3D, related functions of a data channel application, a data channel running environment (data channel runtime), a DCMTSI client, and a human machine interface (human machine interface) may be deployed on the terminal. In the data channel application, JavaScript application interactive logic (JavaScript application interactive logic) and HTML/CSS documents (HTML/CSS documents) may be deployed. The human machine interface may implement functions of the data channel application, for example, playing sound, displaying images, capturing sound, and capturing images. In addition, the data channel application can further invoke domain specific (domain specific) APIs to implement AR functions and artificial intelligence (artificial intelligence) functions, or query local system libraries (native system libraries). The data channel running environment may provide APIs, for example, an RTCPeerConnection API, an RTCDataChannel API, and an RTCSignnallingService API, for the data channel application, to create a data channel, and may also send and receive application layer data via the data channel. The RTCPeerConnection API and the RTCDataChannel API may be provided by a WebRTC user agent. The RTCSignallingService API may be provided by an operating system of the terminal. The DCMTSI client may provide IMS media plane (media plane) support and IMS signaling plane (signaling plane) support for the data channel. For example, the data channel application may invoke an API to trigger media negotiation of the data channel. After receiving corresponding instructions, the data channel running environment may interact with a media module (for example, including a data channel media (data channel media) module) and a signaling module (for example, including a data channel description (data channel description) module) in the DCMTSI client. The media module and the signaling module may be responsible for implementing a media protocol stack and a signaling protocol stack respectively, and performing signaling negotiation and media interworking with a remote terminal through an IMS network to create a data channel, and sending and receiving application layer data via the data channel. In conclusion, the data channel running environment may serve as a bridge between the data channel application and the DCMTSI client, transfer a signaling operation triggered by the data channel application to the bottom-layer signaling module of the terminal for corresponding media negotiation, and parse a signaling message sent by the remote terminal and notify the data channel application. The data channel running environment may further send, through the bottom-layer media module of the terminal, media data to be sent by the data channel application, and distribute, to the data channel application, media data sent by the remote terminal.

It may be understood that the related functions of the data channel running environment, the DCMTSI client, and the human machine interface may be capabilities supported by the terminal before delivery, and the data channel application is obtained by the terminal after delivery from a network as required.

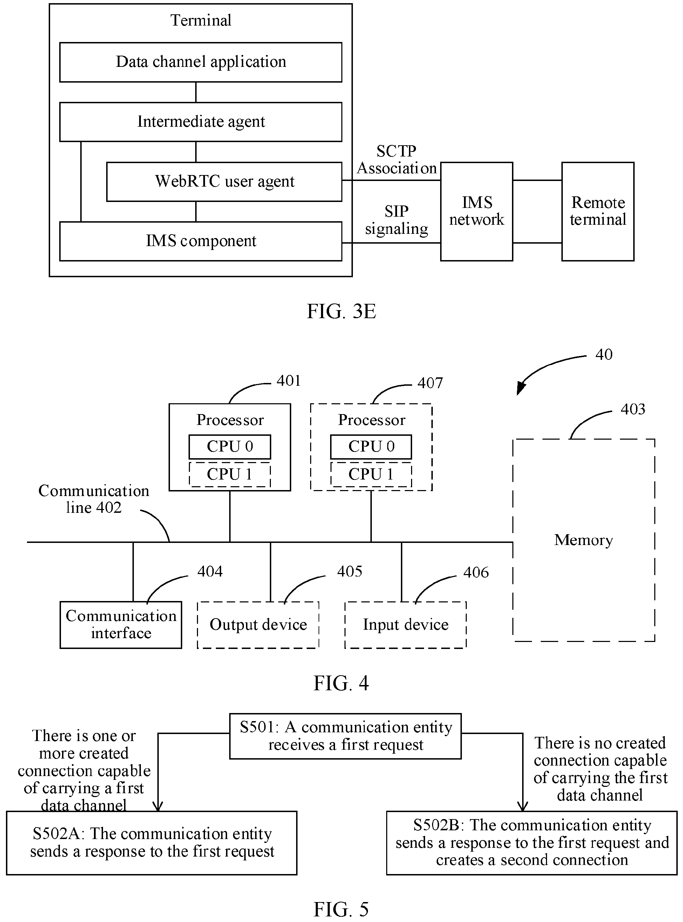

In addition to the architecture shown in FIG. 3D, this application further provides a diagram of a data channel logical architecture supported by a terminal. Specifically, as shown in FIG. 3E, a data channel application, an intermediate agent (agent), a WebRTC user agent, and an IMS component may be deployed on the terminal. The intermediate agent may manage a connection, for example, an SCTP association, corresponding to a data channel created by the terminal. For example, after the data channel application initiates a request for creating a first data channel, the intermediate agent may determine whether there is a connection capable of carrying the first data channel in created connections. If there is a first connection capable of carrying the first data channel, the intermediate agent requests the WebRTC user agent to add, to the first connection, a stream corresponding to the first data channel; or if there is no connection capable of carrying the first data channel, the intermediate agent requests the WebRTC user agent to create a new connection. After receiving the request from the intermediate agent, the WebRTC user agent may perform a corresponding operation, for example, adding the stream corresponding to the first data channel to the first connection, or creating the new connection. The intermediate agent may also interact with the IMS component to implement sending and receiving of SIP signaling. The IMS component may have functions of an IMS signaling plane.

It may be understood that the WebRTC user agent and the IMS component may be capabilities supported by the terminal before delivery, and the data channel application is obtained by the terminal after delivery from a network as required. The intermediate agent may be a capability supported by the terminal before delivery, or may be obtained (for example, obtained from a network) by the terminal after delivery as required. This is not limited.

It should be understood that FIG. 3A or FIG. 3B shows merely an example of a communication scenario to which the method provided in this application may be applied. In a specific application, the communication scenario to which the method provided in this application may be applied may alternatively be in another form. For example, more or fewer entities than those in FIG. 3A or FIG. 3B may be included. This is not limited.

Optionally, the terminal in FIG. 3A or FIG. 3B in this application may also be referred to as a communication apparatus, and may be a general-purpose device or a dedicated device. This is not specifically limited in this application.

Optionally, related functions of the terminal in FIG. 3A or FIG. 3B in this application may be implemented by using one device, may be jointly implemented by using a plurality of devices, or may be implemented by using one or more functional modules in one device. This is not specifically limited in this application. It may be understood that, the foregoing function may be a network element in a hardware device, a software function run on dedicated hardware, a combination of hardware and software, or a virtualization function instantiated on a platform (for example, a cloud platform).

During specific implementation, the terminal in FIG. 3A or FIG. 3B may use a composition structure shown in FIG. 4, or include components shown in FIG. 4. FIG. 4 is a diagram of a hardware structure of a communication apparatus applicable to this application. The communication apparatus 40 includes at least one processor 401 and at least one communication interface 404, to implement the method provided in this application. The communication apparatus 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 402 may include a path, for example, a bus, for transferring information between the foregoing components.

The communication interface 404 is configured to communicate with another device or a communication network. The communication interface 404 may be any apparatus like a transceiver, for example, may be an ethernet interface, a radio access network (radio access network, RAN) interface, a wireless local area network (wireless local area network, WLAN) interface, a transceiver, a pin, a bus, an interface circuit, or a transceiver circuit.

The memory 403 may be a read-only memory (read-only memory, ROM) or another type of static storage device that can store static information and instructions, a random access memory (random access memory, RAM), a cache (cache) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that is accessible by a computer, but is not limited thereto. The memory may exist independently, and is coupled to the processor 401 through the communication line 402. Alternatively, the memory 403 may be integrated with the processor 401. Usually, the memory provided in this application may be non-volatile.

The memory 403 is configured to store computer-executable instructions for performing the solutions provided in this application, and the processor 401 controls execution of the computer-executable instructions. The processor 401 is configured to execute the computer-executable instructions stored in the memory 403, to implement the method provided in this application. Alternatively, optionally, in this application, the processor 401 may perform a processing-related function in the following method provided in this application, and the communication interface 404 is responsible for communicating with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 401 may include one or more CPUs, for example, a CPU 0 and a CPU 1 in FIG. 4.

In an embodiment, the communication apparatus 40 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 40 may further include an output device 405 and/or an input device 406. The output device 405 is coupled to the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 is coupled to the processor 401, and may receive a user input in a plurality of manners. For example, the input device 406 may be a mouse, a keyboard, a touchscreen device, or a sensor device.

It may be understood that the composition structure shown in FIG. 4 does not constitute a limitation on the communication apparatus. In addition to the components shown in FIG. 4, the communication apparatus may include more or fewer components than those shown in the figure, or a combination of some components, or an arrangement of different components.

The following describes the method provided in this application with reference to the accompanying drawings. Network elements in the following embodiments may have the components shown in FIG. 4. Details are not described again.

It may be understood that names of messages between network elements, names of parameters in messages, or the like in the following embodiments of this application are merely examples, and there may alternatively be other names during specific implementation. This is not specifically limited in this application.

It may be understood that, in this application, "/" may indicate an "or" relationship between associated objects. For example, A/B may indicate A or B. "And/or" may be used to describe three relationships between associated objects. For example, A and/or B may indicate three cases: Only A exists, both A and B exist, and only B exists. A and B may be singular or plural. In addition, a representation similar to "at least one of A, B, and C" or "at least one of A, B, or C" usually represents any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, the terms "first", "second", and the like may be used to distinguish between technical features with same or similar functions. The terms such as "first" and "second" do not limit a quantity and an execution sequence, and the terms such as "first" and "second" do not limit a definite difference. In this application, terms such as "example" or "for example" represent giving an example, an illustration, or description. Any embodiment or design scheme described with "example" or "for example" should not be explained as being more preferred or having more advantages than another embodiment or design scheme. A word like "example" or "for example" is used to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that in embodiments of this application, sequence numbers of processes do not mean a sequence of execution. The sequence of execution of the processes should be determined based on functions and internal logic of the processes, and should not constitute any limitation on an implementation process of this application.

It may be understood that, in this application, "when", "in a case in which", "if", and "it is assumed that" mean that corresponding processing is performed in an objective situation, are not intended to limit time, do not require a necessary determining action during implementation, and do not mean any other limitation.

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features as required. Correspondingly, an apparatus provided in this application may also correspondingly implement these features or functions. Details are not described herein.

It may be understood that, in this application, a same step, or steps or technical features that have a same function may be mutually referenced between different embodiments.

It should be understood that a communication entity in the following embodiments of this application may perform some or all of steps in this application. These steps are merely examples. In this application, other steps or variations of various steps may be further performed. In addition, the steps may be performed in a sequence different from a sequence shown in this application, and not all steps in this application are necessarily performed.

It may be understood that in the following method provided in this application, the method is described by using an example in which a communication entity is used as an execution body. However, the execution body is not limited in this application. For example, the communication entity in the method provided in the following embodiments of this application may alternatively be a chip, a chip system, or a processor that supports the communication entity in implementing the method, or may be a logical node, a logical module, or software that can implement all or some functions of the communication entity.

FIG. 5 shows a communication method according to this application. The method may include the following steps.

S501: A communication entity receives a first request.

In this application, the first request is used to request to create a first data channel. The first data channel is a data channel between a first communication apparatus and a second communication apparatus, and the first data channel may be used to carry data of a first application. The first data channel is associated with an IMS session between the first communication apparatus and the second communication apparatus. For example, the first data channel is a logical connection in the IMS session, and is used for transmission of the data of the first application during the IMS session. It may be understood that the first data channel is an ADC, the first application is a data channel application, and the first application is deployed on the first communication apparatus. For description of the IMS session, the ADC, and the data channel application, refer to the foregoing corresponding description. Details are not described again.

For example, the communication scenario shown in FIG. 3A is used as an example. The first communication apparatus is the terminal 302, and the second communication apparatus is the terminal 303, the IMS AS, the DCSF entity, or the DC AS. Alternatively, the first communication apparatus is the terminal 303, and the second communication apparatus is the terminal 302, the IMS AS, the DCSF entity, or the DC AS.

For example, the communication scenario shown in FIG. 3B is used as an example. The first communication apparatus is the terminal 313, and the second communication apparatus is the terminal 314, the IMS AS in the IMS network 311 or the IMS network 312, the DCSF entity in the IMS network 311 or the IMS network 312, or the DC AS in the IMS network 311 or the IMS network 312. Alternatively, the first communication apparatus is the terminal 314, and the second communication apparatus is the terminal 313, the IMS AS in the IMS network 311 or the IMS network 312, the DCSF entity in the IMS network 311 or the IMS network 312, or the DC AS in the IMS network 311 or the IMS network 312.

In this application, the first request may be triggered or sent by the first application on the first communication apparatus. Correspondingly, a WebRTC user agent on the first communication apparatus receives the first request. In this case, the communication entity may be the WebRTC user agent on the first communication apparatus, or may be another functional module on the first communication apparatus. This is not limited. Assuming that the first communication apparatus uses the terminal architecture shown in FIG. 3D, the first request may be sent by the first application to the WebRTC user agent in the data channel running environment. Assuming that the first communication apparatus uses the terminal architecture shown in FIG. 3E, the first request may be sent to the WebRTC user agent by the intermediate agent triggered by the first application.

It may be understood that, when the first communication apparatus creates the first data channel, the first communication apparatus may be an SDP offerer or an SDP answerer. The following separately uses an example in which the first communication apparatus is an SDP offerer or an SDP answerer to describe a process in which the communication entity receives the first request.

Scenario 1: The first communication apparatus is an SDP offerer.

It may be understood that the first application may invoke an API to trigger the first request. The following uses the following manner 1.1 to manner 1.3 as examples for description.

Manner 1.1: The first application invokes an RTCPeerConnection API, a createDataChannel method, and a createOffer method to request the WebRTC user agent to create the first data channel.

A specific process of the manner 1.1 is similar to S101 to S103 in FIG. 1I. For details, refer to the foregoing corresponding description in S101 to S103. Details are not described herein again. In this case, the first request may specifically include at least one of an RTCPeerConnection command, a createDataChannel command, or a createOffer command.

Manner 1.2: The first application invokes an RTCPeerConnection API, a createDataChannel method, and a createOffer method to request the WebRTC user agent to create the first data channel, and indicates whether there is one or more created connection capable of carrying the first data channel. In this case, the first request may specifically include at least one of a createDataChannel command or a createOffer command.

The created connection may be an association, for example, an SCTP association or a DTLS/SCTP association, that has been created by the communication entity. One association may be associated with a group of protocol address information and protocol port information. For example, one association may be associated with IP address information, UDP port information, and SCTP port information. Therefore, that one connection is capable of carrying the first data channel may be understood as that the first data channel may use an IP address, a UDP port, and an SCTP port that are associated with the connection, or an IP address, a UDP port, and an SCTP port that correspond to the first data channel are completely the same as the IP address, the UDP port, and the SCTP port that are associated with the connection. That one connection is not capable of carrying the first data channel may be understood as that the first data channel cannot use an IP address, a UDP port, and an SCTP port that are associated with the connection, or the IP address, the UDP port, and the SCTP port that correspond to the first data channel are not completely the same as the IP address, the UDP port, and the SCTP port that are associated with the connection. It should be understood that one association in this application may alternatively be associated with one or two of IP address information, UDP port information, and SCTP port information. This is not limited. For ease of description, the following embodiments of this application are described by using an example in which one association is associated with IP address information, UDP port information, and SCTP port information.

In a possible design, that one connection is capable of carrying the first data channel includes: a quality-of-service requirement of the first data channel is the same as a quality-of-service requirement of the connection, or a quality-of-service requirement of the first data channel is lower than a quality-of-service requirement of the connection. Optionally, that one connection is capable of carrying the first data channel further includes: an endpoint corresponding to the connection is the same as an endpoint corresponding to the first data channel. In other words, the endpoint corresponding to the connection is also the first communication apparatus and the second communication apparatus, or the connection is established by the first communication apparatus and the second communication apparatus through negotiation. That one connection is not capable of carrying the first data channel includes: the quality-of-service requirement of the first data channel is greater than a quality-of-service requirement of the connection. Optionally, that one connection is not capable of carrying the first data channel further includes: an endpoint corresponding to the connection is not completely the same as the endpoint corresponding to the first data channel. For example, the endpoint corresponding to the connection is the first communication apparatus and a communication apparatus other than the second communication apparatus. The quality-of-service requirement (for example, the quality-of-service requirement of the first data channel, the quality-of-service requirement of the connection, and a quality-of-service requirement of a second data channel in the following embodiments) in this application may include a requirement for a packet loss rate, a requirement for a delay, and/or the like.

In a possible implementation, the first application obtains information about created connections from the WebRTC user agent, and determines whether the created connection is capable of carrying the first data channel. If the created connection is capable of carrying the first data channel, when requesting to create the first data channel, the first application carries information about the connection used to carry the first data channel. If the created connection is not capable of carrying the first data channel, when requesting to create the first data channel, the first application does not carry information about the connection corresponding to the first data channel.

For example, the first application invokes the RTCPeerConnection API, and invokes an API that is provided by the WebRTC user agent and used to query the created connections. The WebRTC user agent sends the information about the created connections to the first application. The information about the created connections may indicate each created connection, for example, indicate an IP address, a UDP port number, and an SCTP port number that are associated with each connection. The first application may query, from the created connections, a connection capable of carrying the first data channel. If it is found that a first connection is capable of carrying the first data channel (that is, the first connection is the connection corresponding to the first data channel in the created connections), the first application may indicate the first connection to the WebRTC user agent. For example, when invoking the createDataChannel method or the createOffer method, the first application carries information about the first connection, for example, at least one of an identifier of the first connection, an IP address associated with the first connection, a UDP port number associated with the first connection, or an SCTP port number associated with the first connection. If no connection capable of carrying the first data channel is found, when invoking the createDataChannel method or the createOffer method, the first application does not carry the information about the connection corresponding to the first data channel.

Manner 1.3: The first application requests, through the intermediate agent, the WebRTC user agent to create the first data channel.

In a possible implementation, the first application invokes an API provided by the intermediate agent, to trigger the intermediate agent to request the WebRTC user agent to create the first data channel.

For example, the first application invokes a createDataChannel method and a createOffer method in an RTCPeerConnection API provided by the intermediate agent, to request the intermediate agent to create the first data channel. After receiving the request of the first application, the intermediate agent determines whether a created connection is capable of carrying the first data channel. If a first connection in created connections is capable of carrying the first data channel, the intermediate agent may request the WebRTC user agent to add a stream corresponding to the first data channel to the first connection. For example, the intermediate agent invokes the createDataChannel method and the createOffer method to request to add the stream corresponding to the first data channel to the first connection. If the created connection is not capable of carrying the first data channel, the intermediate agent may request the WebRTC user agent to create a new connection. For example, the intermediate agent invokes the RTCPeerConnection API, the createDataChannel method, and the createOffer method to request the WebRTC user agent to create the new connection, namely, a connection corresponding to the first data channel. In this case, the first request may specifically include at least one of an RTCPeerConnection command, a createDataChannel command, or a createOffer command sent by the intermediate agent.

Scenario 2: The first communication apparatus is an SDP answerer.

It may be understood that, after receiving SDP offer information from an SDP offerer, the communication entity may send SDP information, in the SDP offer information, that is related to the first application to the first application. After receiving the SDP information, the first application may invoke an API to trigger the first request. The following uses the following manner 2.1 to manner 2.3 as examples for description.

Manner 2.1: The first application invokes an RTCPeerConnection API, a createDataChannel method, and a createAnswer method to request the WebRTC user agent to create the first data channel. In this case, the first request may specifically include at least one of an RTCPeerConnection command, a createDataChannel command, or a createAnswer command.

A specific process of the manner 2.1 is similar to S106 to S109 in FIG. 1I. For details, refer to the foregoing corresponding description in S106 to S109. Details are not described herein again.

Manner 2.2: The first application invokes an RTCPeerConnection API, a createDataChannel method, and a createAnswer method to request the WebRTC user agent to create the first data channel, and indicates whether there is one or more created connection capable of carrying the first data channel. In this case, the first request may specifically include at least one of a createDataChannel command or a createAnswer command.

It may be understood that a process in the manner 2.2 is similar to the process in the manner 1.2. For details, refer to corresponding description in the manner 1.2. A difference lies in that in the manner 1.2, the first application invokes the createOffer method to create an SDP offer, and in the manner 2.2, the first application invokes the createAnswer method to create an SDP answer.

Manner 2.3: The first application requests, through the intermediate agent, the WebRTC user agent to create the first data channel.

In a possible implementation, the first application invokes an API provided by the intermediate agent, to trigger the intermediate agent to request the WebRTC user agent to create the first data channel. For details, refer to corresponding description in the foregoing manner 1.3. A difference lies in that in the manner 1.2, the first application and the intermediate agent invoke the createOffer method to create an SDP offer, and in the manner 2.2, the first application and the intermediate agent invoke a createAnswer method to create an SDP answer. In this case, the first request may specifically include at least one of an RTCPeerConnection command, a createDataChannel command, or a createAnswer command sent by the intermediate agent.

In a possible implementation, after receiving the first request, the WebRTC user agent may determine whether a created connection is capable of carrying the first data channel.

For example, for the foregoing manner 1.1 and manner 2.1, the WebRTC user agent may query created connections for a connection capable of carrying the first data channel, and if it is found that the first connection is capable of carrying the first data channel, the WebRTC user agent determines that the first connection is capable of carrying the first data channel. If no connection capable of carrying the first data channel is found, the WebRTC user agent determines that none of the created connections is capable of carrying the first data channel.

For example, for the foregoing manner 1.2 and manner 2.2, if the first request includes the information about the first connection, for example, the first application carries the information about the first connection when invoking the createDataChannel method, the WebRTC user agent determines that the first connection is capable of carrying the first data channel. If the first request does not include the information about the connection corresponding to the first data channel, for example, the first application does not carry the information about the connection corresponding to the first data channel when invoking the createDataChannel method, the WebRTC user agent determines that none of the created connections is capable of carrying the first data channel.

For example, for the foregoing manner 1.3 and manner 2.3, if the WebRTC user agent detects that the intermediate agent does not invoke the RTCPeerConnection API, but directly invokes the createDataChannel method corresponding to the first connection, the WebRTC user agent determines that the first connection is capable of carrying the first data channel. If the WebRTC user agent detects that the intermediate agent invokes the RTCPeerConnection API, the WebRTC user agent determines that none of the created connections is capable of carrying the first data channel.

It may be understood that, if there is a created connection, for example, the first connection, that is capable of carrying the first data channel, the communication entity may indicate to use the first connection to carry the first data channel. For example, the communication entity may perform the following S502A. If there is no created connection capable of carrying the first data channel, the communication entity may indicate to use a new connection to carry the first data channel and create the new connection. For example, the communication entity may perform the following S502B.

S502A: The communication entity sends a response to the first request.

In a possible implementation, the WebRTC user agent sends the response to the first request. The response to the first request includes first media description information, the first media description information includes first indication information, and the first indication information indicates the first connection. For example, the first indication information includes IP address information, UDP port information, and SCTP port information. It may be understood that the first indication information indicates IP address information, UDP port information, and SCTP port information that are associated with the first connection.

The following uses the foregoing manner 1.1 to manner 2.3 as examples to describe content included in the first media description information.

For example, for the foregoing manner 1.1, manner 1.2, manner 2.1, and manner 2.2, the WebRTC user agent sends the first media description information to the first application. Content included in the first media description information may be shown in Table 6. In the first media description information, an IP address is IN IP4 192.0.2.1 (also the IP address associated with the first connection), UDP port information is 10001 (also the UDP port information associated with the first connection), and SCTP port information is 57483 (also the SCTP port information associated with the first connection). The first media description information shown in Table 6 further includes a stream identifier (streamID) 7384 of the first data channel, and the first data channel is associated with an application #1 (namely, the first application).

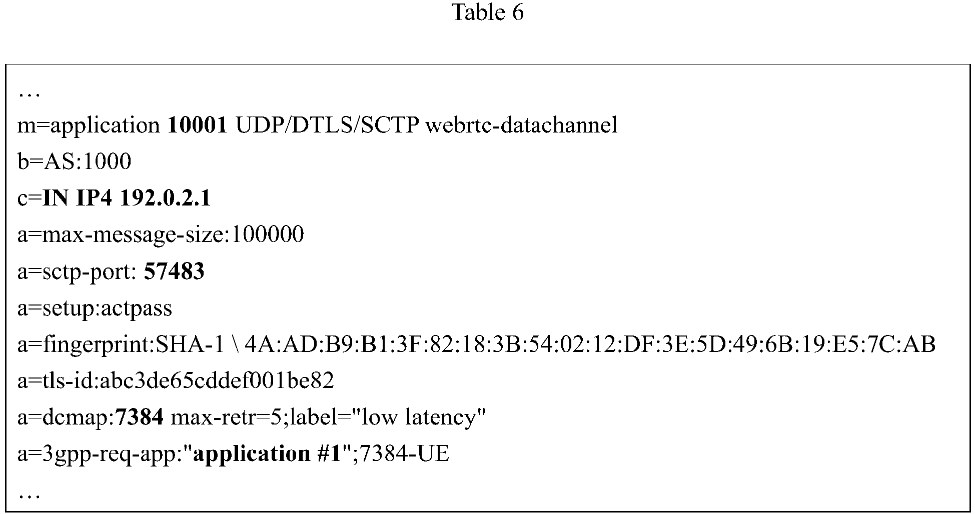

For example, for the foregoing manner 1.3 and manner 2.3, the WebRTC user agent sends the first media description information to the intermediate agent. Content included in the first media description information may be shown in Table 7. In the first media description information, an IP address is IN IP4 192.0.2.1 (also the IP address associated with the first connection), UDP port information is 10001 (also the UDP port information associated with the first connection), and SCTP port information is 57483 (also the SCTP port information associated with the first connection). The first media description information shown in Table 7 further includes a stream identifier 7384 of the first data channel, and the first data channel is associated with an application #1 (namely, the first application). It may be understood that the first connection is a connection created before S501. Therefore, before S501, the first connection has a corresponding data channel, for example, a third data channel, where the third data channel is used for transmission of data of a third application. Therefore, the first media description information shown in Table 7 further includes a stream identifier 7216 of the third data channel, and the third data channel is associated with an application #3 (namely, the third application). In other words, the third data channel and the first data channel share the first connection, or share one line m (namely, the media description information shown in Table 7). After receiving the first media description information, the intermediate agent may send seventh media description information to the first application. For example, the intermediate agent deletes information about an application other than the first application from the first media description, to obtain seventh media description information shown in Table 8.

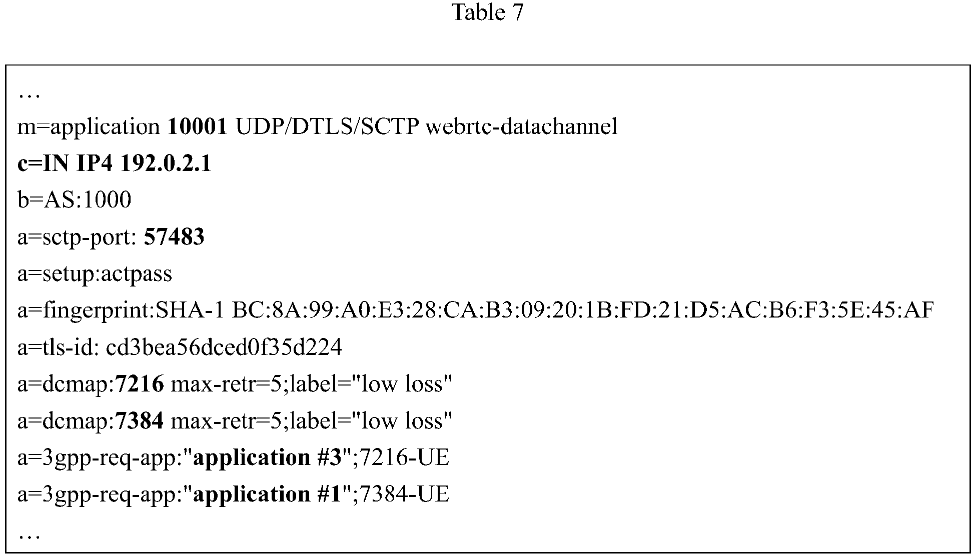

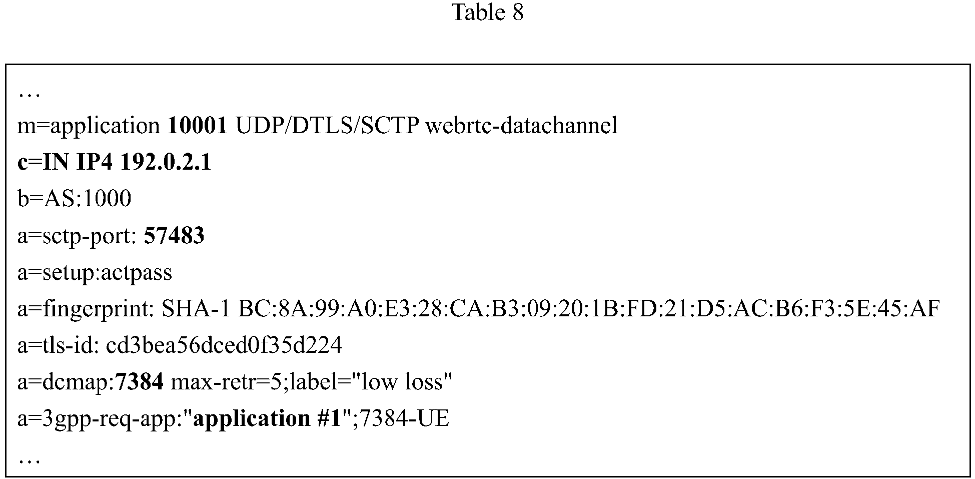

It may be understood that, after S502A, the communication entity may send eighth media description information to a network side, and the network side may send the eighth media description information to the second communication apparatus. The eighth media description information may include the information about the connection corresponding to the first data channel and information about a connection corresponding to the third data channel. The eighth media description information further includes identification information (for example, the stream identifier) of the first data channel and identification information (for example, the stream identifier) of the third data channel. For example, the eighth media description information includes the content shown in Table 7. In Table 7, both the information about the connection corresponding to the first data channel and the information about the connection corresponding to the third data channel correspond to content from "m=application **10001** UDP/DTLS/SCTP webrtc-datachannel" to "a=tls-id: cd3bea56dced0f35d224", in other words, a data channel whose stream identifier is 7216 (namely, the third data channel) and a data channel whose stream identifier is 7384 (namely, the first data channel) may share the content from "m=application **10001** UDP/DTLS/SCTP webrtc-datachannel" to "a=tls-id: cd3bea56dced0f35d224". Therefore, a quantity of media lines included in the eighth media description information can be reduced, to reduce signaling overheads of the eighth media description information.

It may be understood that, for the foregoing scenario 1, the eighth media description information is SDP offer information, and may be carried in an SIP request, for example, INVITE, UPDATE, or re-INVITE. For the foregoing scenario 2, the eighth media description information is SDP answer information, and may be carried in an SIP response, for example, an 18x response or a 200 OK response.

The following describes a case in which there is no created connection capable of carrying the first data channel.

S502B: The communication entity sends a response to the first request and creates a second connection.

In a possible implementation, the WebRTC user agent sends the response to the first request. The response to the first request includes second media description information. The second media description information includes second indication information. The second indication information indicates the second connection. For example, the second indication information includes IP address information, UDP port information, and SCTP information that are associated with the second connection. The second connection is a connection corresponding to the first data channel.

The following uses the foregoing manner 1.1 to manner 2.3 as examples to describe content included in the second media description information.

For example, for the foregoing manner 1.1, manner 1.2, manner 2.1, and manner 2.2, the WebRTC user agent sends the second media description information to the first application. The content included in the second media description information may be shown in Table 9. In the second media description information, an IP address is IN IP4 192.0.2.132 (also an IP address associated with the second connection), UDP port information is 10011 (also the UDP port information associated with the second connection), and SCTP port information is 57486 (also the SCTP port information associated with the second connection). The second media description information shown in Table 9 further includes a stream identifier 7388 of the first data channel, and the first data channel is associated with an application #1 (namely, the first application). After receiving the second media description information, the first application invokes an API, for example, a setLocalDescription API, to trigger the WebRTC user agent to parse the second media description information and create the second connection.

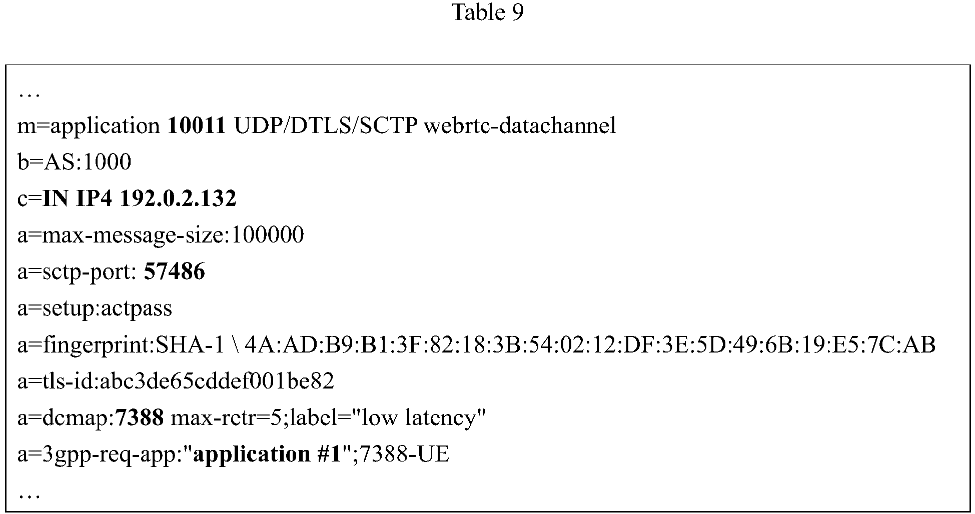

For example, for the foregoing manner 1.3 and manner 2.3, the WebRTC user agent sends the second media description information shown in Table 9 to the intermediate agent. After receiving the second media description information, the intermediate agent sends the second media description information to the first application. After receiving the second media description information, the first application may invoke an API to create the second connection. For example, the first application invokes an API, for example, the setLocalDescription API, and the intermediate agent may transparently transmit an invoking command of the first application to the WebRTC user agent, to trigger the WebRTC user agent to parse the second media description information and create the second connection.

It may be understood that, after S502B, the communication entity may send ninth media description information to a network side, and the network side may send the ninth media description information to the second communication apparatus. The ninth media description information may include the information about the connection corresponding to the first data channel. The ninth media description information further includes identification information (for example, the stream identifier) of the first data channel. For example, the ninth media description information includes the content shown in Table 9.

It may be understood that, for the foregoing scenario 1, the ninth media description information is SDP offer information, and may be carried in an SIP request, for example, INVITE, UPDATE, or re-INVITE. For the foregoing scenario 2, the ninth media description information is SDP answer information, and may be carried in an SIP response, for example, an 18x response or a 200 OK response.

According to the method shown in FIG. 5, before creating the first data channel, the communication entity may determine, in the created connections, whether there is a connection capable of carrying the first data channel. If there is a connection capable of carrying the first data channel, the first data channel may multiplex the connection, so that resource overheads can be reduced. It may be understood that the connection may be an SCTP association. The SCTP association is associated with media resources, bandwidth resources, and port resources (for example, port resources required for NAT traversal and firewall management). Therefore, reusing of the SCTP association can reduce media resource overheads, bandwidth resource overheads, and port resource overheads.

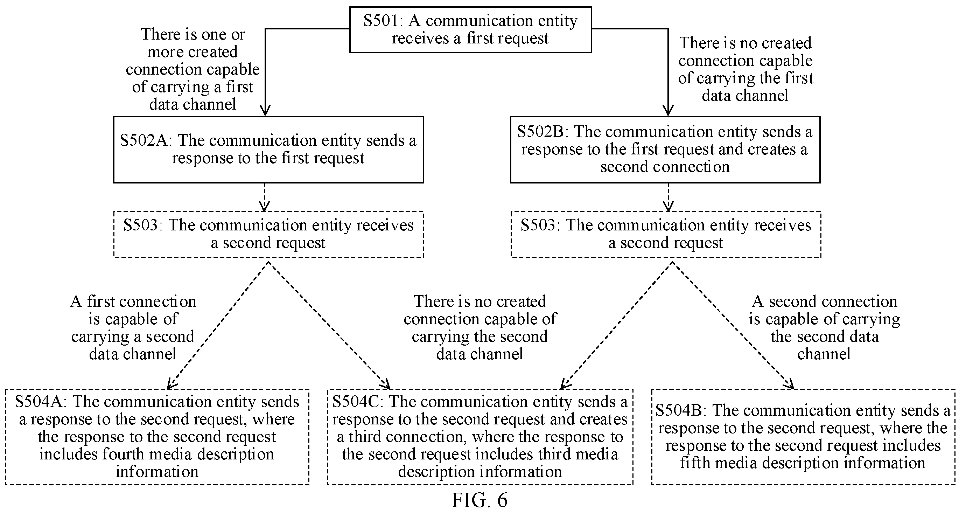

Optionally, in a possible implementation of the method shown in FIG. 5, a second application different from the first application may request to create the second data channel, and the communication entity may determine, depending on whether the created connection is capable of carrying the second data channel, whether to create a new connection, so as to reduce resource overheads. Specifically, as shown in FIG. 6, the method shown in FIG. 5 may further include the following steps.

S503: The communication entity receives a second request.

In this application, the second request is used to request to create the second data channel. The second data channel is used to carry data of the second application. It may be understood that the second data channel is an ADC, the second application is a data channel application, and the second application is deployed on the first communication apparatus. Optionally, the second data channel is a data channel between the first communication apparatus and the second communication apparatus. The second data channel is associated with an IMS session between the first communication apparatus and the second communication apparatus. For example, the second data channel is a logical connection in the IMS session, and is used for transmission of the data of the second application during the IMS session. For description of the IMS session, the ADC, and the data channel application, refer to the foregoing corresponding description. Details are not described again.

In this application, the second request may be triggered or sent by the second application on the first communication apparatus. Correspondingly, the WebRTC user agent on the first communication apparatus receives the first request. In this case, the communication entity may be the WebRTC user agent on the first communication apparatus, or may be another functional module on the first communication apparatus. This is not limited. Assuming that the first communication apparatus uses the terminal architecture shown in FIG. 3D, the second request may be sent by the second application to the WebRTC user agent in the data channel running environment. Assuming that the first communication apparatus uses the terminal architecture shown in FIG. 3E, the second request may be sent to the WebRTC user agent by the intermediate agent triggered by the second application.

The following separately uses an example in which the first communication apparatus is an SDP offerer or an SDP answerer to describe a process in which the communication entity receives the second request.

Scenario 3: The first communication apparatus is an SDP offerer.

It may be understood that the second application may invoke an API to trigger the second request. The following uses the following manner 3.1 to manner 3.3 as examples for description.

Manner 3.1: The second application invokes the RTCPeerConnection API, the createDataChannel method, and the createOffer method to request the WebRTC user agent to create the second data channel. In this case, the second request may specifically include at least one of the RTCPeerConnection command, the createDataChannel command, or the createOffer command.

Manner 3.2: The second application invokes the RTCPeerConnection API, the createDataChannel method, and the createOffer method to request the WebRTC user agent to create the second data channel, and indicates whether there is one or more created connection capable of carrying the second data channel. In this case, the second request may specifically include at least one of the createDataChannel command or the createOffer command.

Manner 3.3: The second application requests, through the intermediate agent, the WebRTC user agent to create the second data channel. In this case, the second request may specifically include at least one of the RTCPeerConnection command, the createDataChannel command, or the createOffer command sent by the intermediate agent.

It may be understood that processes in the manner 3.1 to the manner 3.3 are similar to the processes in the manner 1.1 to the manner 1.3 in the scenario 1. For details, refer to corresponding description in the manner 1.1 to the manner 1.3.

It may be understood that the scenario 3 may be combined with the foregoing scenario 1, indicating that during creation of the first data channel and the second data channel, the first communication apparatus is a party that sends an SDP offer. The scenario 3 may alternatively be combined with the foregoing scenario 2, indicating that during creation of the first data channel, the first communication apparatus is a party that sends an SDP answer, and during creation of the second data channel, the first communication apparatus is a party that sends an SDP offer. In addition, when the scenario 3 is combined with the scenario 1, the manner 3.1 to the manner 3.3 may be respectively combined with the manner 1.1 to the manner 1.3. When the scenario 3 is combined with the scenario 2, the manner 3.1 to the manner 3.3 may be respectively combined with the manner 2.1 to the manner 2.3. This is not limited.

Scenario 4: The first communication apparatus is an SDP answerer.

It may be understood that, after receiving SDP offer information from an SDP offerer, the communication entity may send SDP information, in the SDP offer information, that is related to the second application to the second application. After receiving the SDP information, the second application may invoke an API to trigger the second request. The following uses the following manner 4.1 to manner 4.3 as examples for description.

Manner 4.1: The second application invokes the RTCPeerConnection API, the createDataChannel method, and the createAnswer method to request the WebRTC user agent to create the second data channel. In this case, the second request may specifically include at least one of the RTCPeerConnection command, the createDataChannel command, or the createAnswer command.

Manner 4.2: The second application invokes the RTCPeerConnection API, the createDataChannel method, and the createAnswer method to request the WebRTC user agent to create the second data channel, and indicates whether there is one or more created connection capable of carrying the second data channel. In this case, the second request may specifically include at least one of the createDataChannel command or the createAnswer command.

Manner 4.3: The second application requests, through the intermediate agent, the WebRTC user agent to create the second data channel. In this case, the second request may specifically include at least one of the RTCPeerConnection command, the createDataChannel command, or the createAnswer command sent by the intermediate agent.

It may be understood that processes in the manner 4.1 to the manner 4.3 are similar to the processes in the manner 2.1 to the manner 2.3 in the scenario 1. For details, refer to corresponding description in the manner 2.1 to the manner 2.3.

It may be understood that the scenario 4 may be combined with the scenario 1, indicating that during creation of the first data channel, the first communication apparatus is a party that sends an SDP offer, and during creation of the second data channel, the first communication apparatus is a party that sends an SDP answer. The scenario 4 may alternatively be combined with the scenario 2, indicating that during creation of the first data channel and the second data channel, the first communication apparatus is a party that sends an SDP answer. In addition, when the scenario 4 is combined with the scenario 1, the manner 4.1 to the manner 4.3 may be respectively combined with the manner 1.1 to the manner 1.3. When the scenario 4 is combined with the scenario 2, the manner 4.1 to the manner 4.3 may be respectively combined with the manner 2.1 to the manner 2.3. This is not limited.

It may be understood that, after receiving the second request, the WebRTC user agent may determine whether the created connection is capable of carrying the second data channel. This process is similar to the process in which the WebRTC user agent determines, after receiving the first request, whether the created connection is capable of carrying the first data channel in S501. For details, refer to corresponding description in S501. Details are not described again.

It may be understood that, for S502A and S502B, the communication entity may perform different operations. Specifically, for S502A, if there is a created connection, for example, the first connection, that is capable of carrying the second data channel, the communication entity may indicate to use the first connection to carry the second data channel. For example, the communication entity may perform the following S504A. If there is no created connection capable of carrying the second data channel, the communication entity may indicate to use a new connection to carry the second data channel and create the new connection. For example, the communication entity may perform the following S504C. For S502B, if there is a created connection, for example, the second connection, that is capable of carrying the second data channel, the communication entity may indicate to use the second connection to carry the second data channel. For example, the communication entity may perform the following S504B. If there is no created connection capable of carrying the second data channel, the communication entity may indicate to use a new connection to carry the second data channel and create the new connection. For example, the communication entity may perform the following S504C. The following provides detailed description.

First, a case in which the first connection is capable of carrying the second data channel is described.

For S502A, if the first connection is capable of carrying the second data channel, the communication entity may perform S504A. In other words, in the communication method provided in this application, the communication entity may perform S501, S502A, S503, and S504A. It may be understood that, that the first connection is capable of carrying the second data channel includes: a quality-of-service requirement of the second data channel is the same as a quality-of-service requirement of the first connection, or a quality-of-service requirement of the second data channel is lower than a quality-of-service requirement of the first connection. Optionally, that the first connection is capable of carrying the second data channel further includes: an endpoint corresponding to the first connection is the same as an endpoint corresponding to the second data channel. The following describes a specific process of S504A.

S504A: The communication entity sends a response to the second request. The response to the second request includes fourth media description information.

In a possible implementation, the WebRTC user agent sends the response to the second request. The fourth media description information includes the first indication information. The first indication information indicates the first connection. The first connection is a connection corresponding to the second data channel in the created connections.

For example, for the foregoing manner 3.1, manner 3.2, manner 4.1, and manner 4.2, the WebRTC user agent sends the fourth media description information to the second application. Content included in the fourth media description information may be shown in Table 10. In the fourth media description information, an IP address is IN IP4 192.0.2.1 (also the IP address associated with the first connection), UDP port information is 10001 (also the UDP port information associated with the first connection), and SCTP port information is 57483 (also the SCTP port information associated with the first connection). The fourth media description information shown in Table 10 further includes a stream identifier 7380 of the second data channel, and the second data channel is associated with an application #2 (namely, the second application).

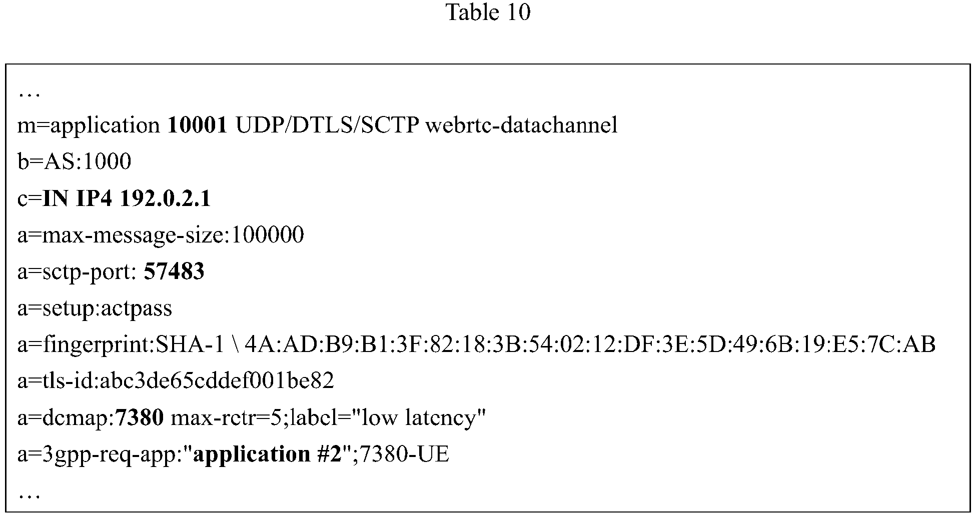

For example, for the foregoing manner 3.3 and manner 4.3, the WebRTC user agent sends the fourth media description information to the intermediate agent. Content included in the fourth media description information may be shown in Table 11. In the fourth media description information, an IP address is IN IP4 192.0.2.1 (also the IP address associated with the first connection), UDP port information is 10001 (also the UDP port information associated with the first connection), and SCTP port information is 57483 (also the SCTP port information associated with the first connection). The fourth media description information shown in Table 11 further includes a stream identifier 7380 of the second data channel, and the second data channel is associated with an application #2 (namely, the second application). The fourth media description information shown in Table 11 further includes a stream identifier 7384 of the first data channel and a stream identifier 7216 of the third data channel, the first data channel is associated with an application #1 (namely, the first application), and the third data channel is associated with an application #3 (namely, the third application). In other words, the first data channel, the second data channel, and the third data channel share the first connection, or share one line m (namely, the media description information shown in Table 11). After receiving the fourth media description information, the intermediate agent may send tenth media description information to the second application. For example, the intermediate agent deletes information about an application other than the second application from the fourth media description, to obtain tenth media description information shown in Table 12.

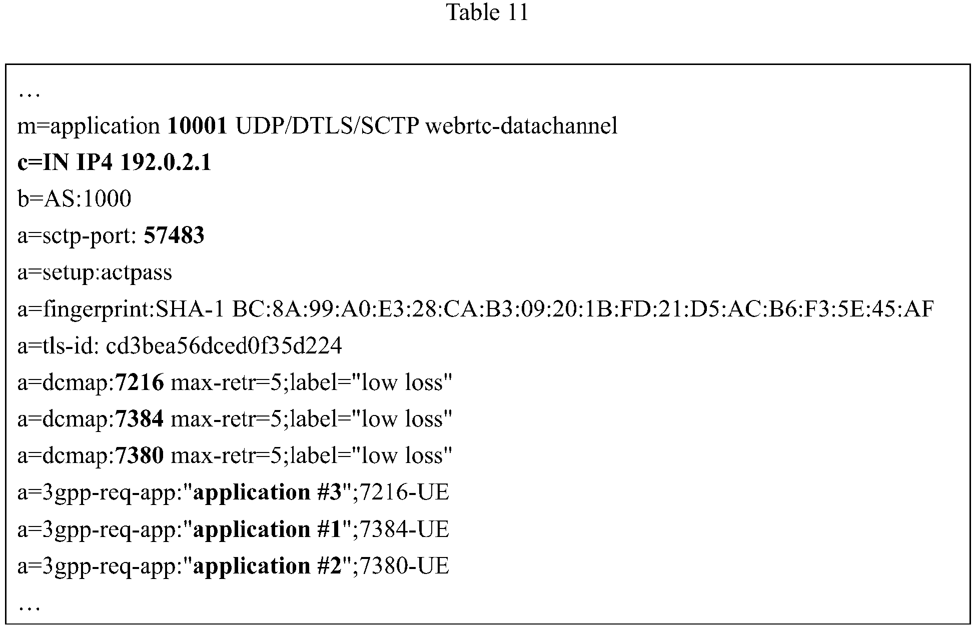

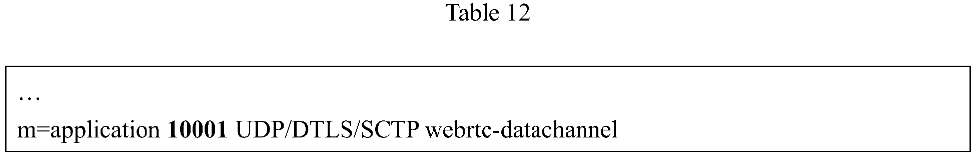

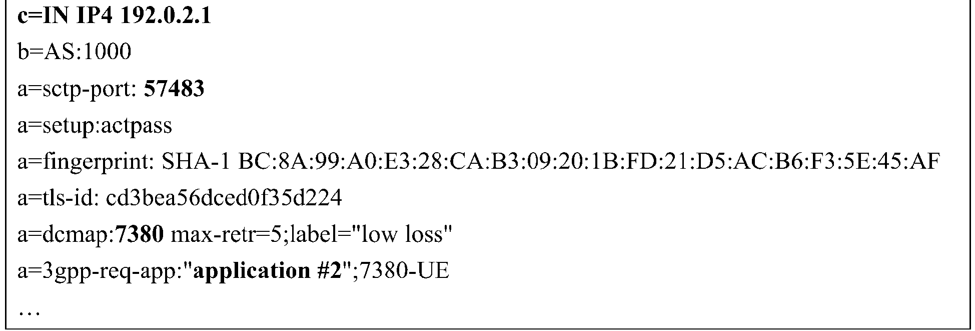

It may be understood that, after S504A, the communication entity may send eleventh media description information to the network side, and the network side may send the eleventh media description information to a remote endpoint, for example, the second communication apparatus. The eleventh media description information may include the information about the connection corresponding to the first data channel, information about the connection corresponding to the second data channel, and the information about the connection corresponding to the third data channel. The eleventh media description information further includes the identification information (for example, the stream identifier) of the first data channel, identification information (for example, the stream identifier) of the second data channel, and the identification information (for example, the stream identifier) of the third data channel. For example, the eleventh media description information includes the content shown in Table 11. In Table 11, the information about the connection corresponding to the first data channel, the information about the connection corresponding to the second data channel, the information about the connection corresponding to the third data channel all correspond to content from "m=application **10001** UDP/DTLS/SCTP webrtc-datachannel" to "a=tls-id: cd3bea56dced0f35d224". Therefore, a quantity of media lines included in the eleventh media description information can be reduced, to reduce signaling overheads of the eleventh media description information.

It may be understood that, for the foregoing scenario 3, the eleventh media description information is SDP offer information, and may be carried in an SIP request, for example, INVITE, UPDATE, or re-INVITE. For the foregoing scenario 4, the eleventh media description information is SDP answer information, and may be carried in an SIP response, for example, a 18x response or a 200 OK response.

The following describes a case in which the second connection is capable of carrying the second data channel.

For S502B, if the second connection is capable of carrying the second data channel, the communication entity may perform S504B. In other words, in the communication method provided in this application, the communication entity may perform S501, S502B, S503, and S504B. It may be understood that, that the second connection is capable of carrying the second data channel includes: the quality-of-service requirement of the second data channel is the same as the quality-of-service requirement of the first data channel (or a quality-of-service requirement of the second connection); or the quality-of-service requirement of the second data channel is lower than the quality-of-service requirement of the first data channel (or a quality-of-service requirement of the second connection). Optionally, that the second connection is capable of carrying the second data channel further includes: the endpoint corresponding to the second data channel is the same as the endpoint corresponding to the first data channel (or an endpoint corresponding to the second connection). For example, the endpoint corresponding to the second data channel is also the communication entity and the second communication apparatus. The following describes a specific process of S504B.

S504B: The communication entity sends a response to the second request. The response to the second request includes fifth media description information.

In a possible implementation, the WebRTC user agent sends the response to the second request. The fifth media description information includes the second indication information. The second indication information indicates the second connection. The second connection is a connection corresponding to the second data channel in the created connections.

For example, for the foregoing manner 3.1, manner 3.2, manner 4.1, and manner 4.2, the WebRTC user agent sends the fifth media description information to the second application. Content included in the fifth media description information may be shown in Table 13. In the fifth media description information, an IP address is IN IP4 192.0.2.132 (also the IP address associated with the second connection), UDP port information is 10011 (also the UDP port information associated with the second connection), and SCTP port information is 57486 (also the SCTP port information associated with the second connection). The fifth media description information shown in Table 13 further includes a stream identifier 7485 of the second data channel, and the second data channel is associated with an application #2 (namely, the second application).

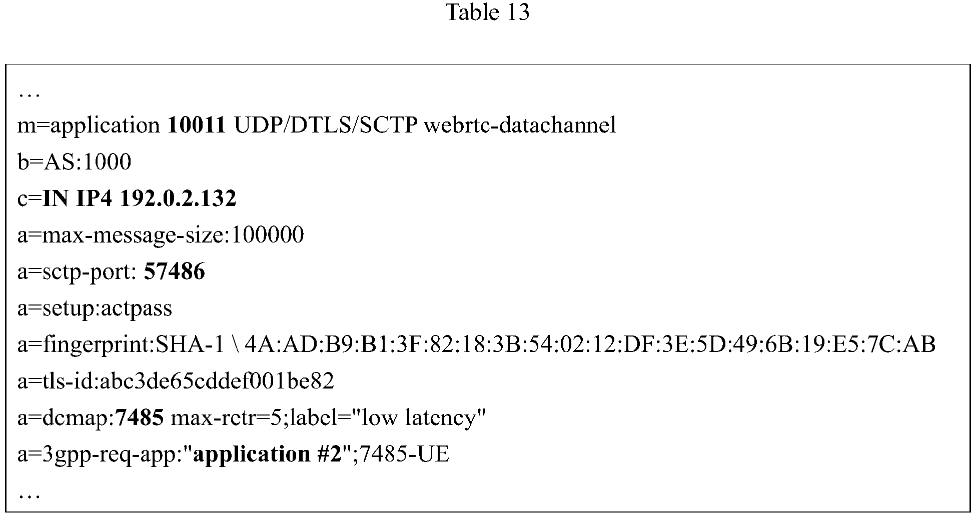

For example, for the foregoing manner 3.3 and manner 4.3, the WebRTC user agent sends the fifth media description information to the intermediate agent. Content included in the fifth media description information may be shown in Table 14. In the fifth media description information, an IP address is IN IP4 192.0.2.132 (also the IP address associated with the second connection), UDP port information is 10011 (also the UDP port information associated with the second connection), and SCTP port information is 57486 (also the SCTP port information associated with the second connection). The fifth media description information shown in Table 14 further includes a stream identifier 7485 of the second data channel, and the second data channel is associated with an application #2 (namely, the second application). The fifth media description information shown in Table 14 further includes a stream identifier 7388 of the first data channel, and the first data channel is associated with an application #1 (namely, the first application). In other words, the first data channel and the second data channel share the second connection, or share one line m (namely, the media description information shown in Table 14). After receiving the fifth media description information, the intermediate agent may send twelfth media description information to the second application. For example, the intermediate agent deletes information about an application other than the second application from the fifth media description, to obtain twelfth media description information shown in the foregoing Table 13.

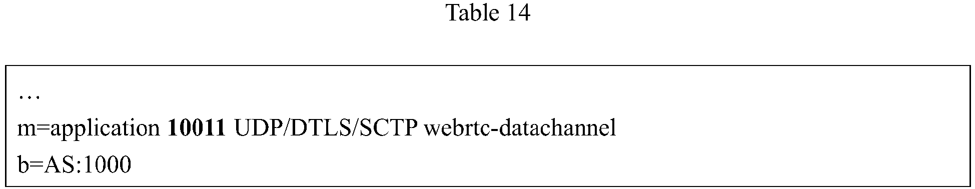

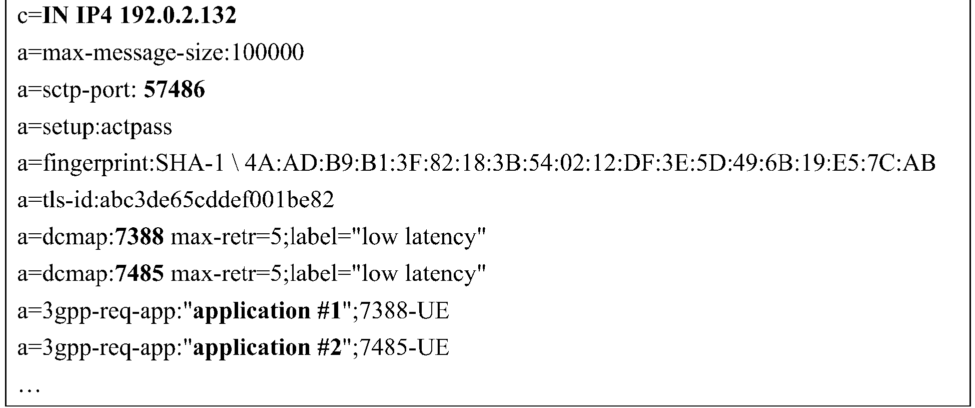

It may be understood that, after S504B, the communication entity may send sixth media description information to the network side, and the network side may send the sixth media description information to a remote endpoint, for example, the second communication apparatus. The sixth media description information may include the information about the connection corresponding to the first data channel and information about the connection corresponding to the second data channel. The sixth media description information further includes identification information (for example, the stream identifier) of the first data channel and identification information (for example, the stream identifier) of the second data channel. For example, the sixth media description information includes the content shown in Table 14. In Table 14, both the information about the connection corresponding to the first data channel and the information about the connection corresponding to the second data channel correspond to content from "m=application **10011** UDP/DTLS/SCTP webrtc-datachannel" to "a=tls-id:abc3de65cddef001be82". Therefore, a quantity of media lines included in the sixth media description information can be reduced, to reduce signaling overheads of the sixth media description information.

It may be understood that, for the foregoing scenario 3, the sixth media description information is SDP offer information, and may be carried in an SIP request, for example, INVITE, UPDATE, or re-INVITE. For the foregoing scenario 4, the sixth media description information is SDP answer information, and may be carried in an SIP response, for example, an 18x response or a 200 OK response.

The following describes a case in which none of the created connections is capable of carrying the second data channel.

For S502A and S502B, if the created connection does not carry the second data channel, the communication entity may perform S504C. In other words, in the communication method provided in this application, the communication entity may perform S501, S502A, S503, and S504C; or the communication entity may perform S501, S502B, S503, and S504C. It may be understood that, that the second connection (or the first connection) is not capable of carrying the second data channel includes: the quality-of-service requirement of the second data channel is higher than a quality-of-service requirement of the second connection (or the first connection). Optionally, that the second connection (or the first connection) is not capable of carrying the second data channel further includes: an endpoint corresponding to the second data channel is not completely the same as an endpoint corresponding to the second connection (or the first connection). The following describes a specific process of S504C.

S504C: The communication entity sends a response to the second request and creates a third connection. The response to the second request includes third media description information.

In a possible implementation, the WebRTC user agent sends the response to the second request. The third media description information includes third indication information corresponding to the second data channel. The third indication information indicates the third connection. For example, the third indication information includes IP address information, UDP port information, and SCTP information that are associated with the third connection. The third connection is a connection corresponding to the second data channel.

For example, for the foregoing manner 3.1, manner 3.2, manner 4.1, and manner 4.2, the WebRTC user agent sends third media description information to the second application. Content included in the third media description information may be shown in Table 15. In the third media description information, an indicated IP address is IN IP4 192.0.2.156 (also an IP address associated with the third connection), indicated UDP port information is 10010 (also the UDP port information associated with the third connection), and indicated SCTP port information is 57576 (also the SCTP port information associated with the third connection). The third media description information shown in Table 15 further indicates a stream identifier 7596 of the second data channel, and the second data channel is associated with an application #2 (namely, the second application). After receiving the third media description information, the second application invokes an API, for example, the setLocalDescription API, to trigger the WebRTC user agent to parse the third media description information and create the third connection.

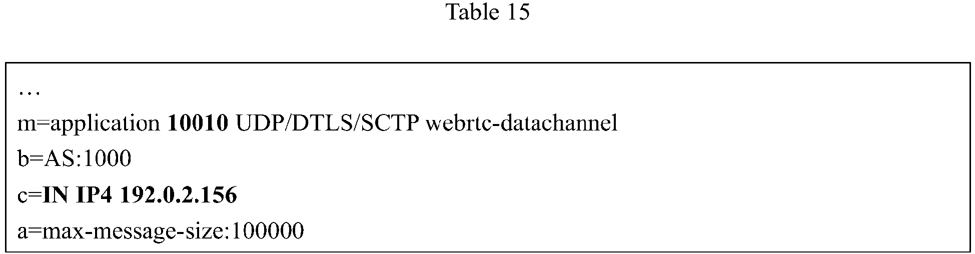

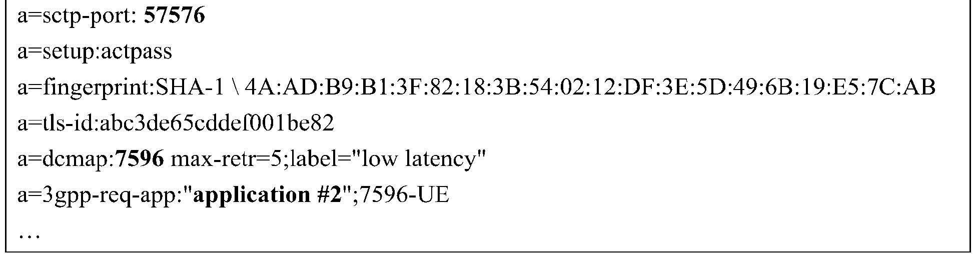

For example, for the foregoing manner 3.3 and manner 4.3, the WebRTC user agent sends the third media description information shown in Table 15 to the intermediate agent. After receiving the third media description information, the intermediate agent sends the third media description information to the second application. After receiving the third media description information, the second application may invoke an API to create the third connection. For example, the second application invokes an API, for example, the setLocalDescription API, and the intermediate agent may transparently transmit an invoking command of the second application to the WebRTC user agent, to trigger the WebRTC user agent to parse the third media description information and create the third connection.

It may be understood that, after S504C, the communication entity may send thirteenth media description information to the network side, and the network side may send the thirteenth media description information to the remote endpoint, for example, the second communication apparatus. The thirteenth media description information may include the information about the connection corresponding to the second data channel. The thirteenth media description information further includes the identification information (for example, the stream identifier) of the second data channel. For example, the thirteenth media description information includes the content shown in Table 15.

It may be understood that, for the foregoing scenario 3, the thirteenth media description information is SDP offer information, and may be carried in an SIP request, for example, INVITE, UPDATE, or re-INVITE. For the foregoing scenario 4, the thirteenth media description information is SDP answer information, and may be carried in an SIP response, for example, an 18x response or a 200 OK response.

It may be understood that the actions of the communication entity in the method shown in FIG. 5 or FIG. 6 may be performed by the processor 401 in the communication apparatus 40 shown in FIG. 4 by invoking the application program code stored in the memory 403. This is not limited in this application.

The foregoing describes, from a perspective of the communication entity, a process in which the first application and the second application trigger creation of the data channel. To better understand the method provided in this application, the following describes, from a perspective of interaction between a first terminal and a second terminal, a process of negotiating a data channel between the first terminal and the second terminal.

First, an example in which the first terminal is an SDP offerer, the second terminal is an SDP answerer, the first terminal creates a first data channel in the manner 1.1 and creates a second data channel in the manner 3.1, and the second terminal creates the first data channel in the manner 2.1 and creates the second data channel in the manner 4.1 is used for description. The first terminal and the second terminal have the terminal architecture shown in FIG. 3D.

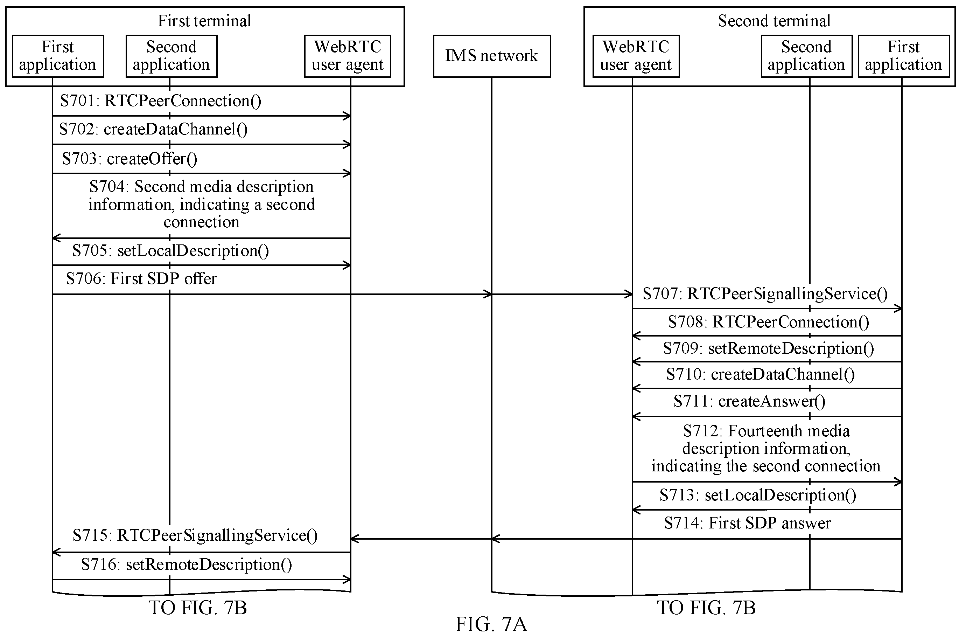

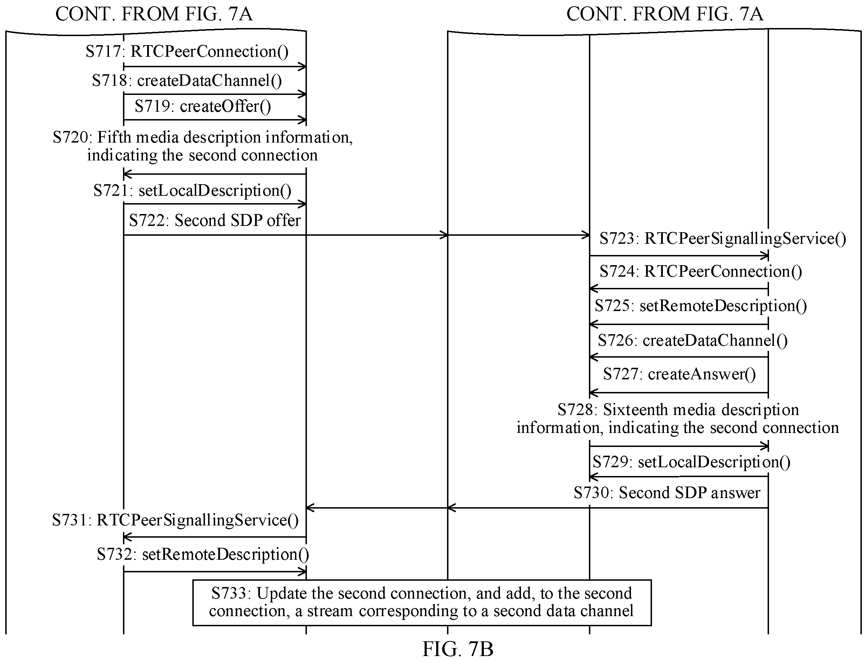

FIG. 7A and FIG. 7B show another communication method according to this application. The communication method may include the following steps.

S701: A first application of a first terminal invokes an RTCPeerConnection API to request a WebRTC user agent of the first terminal to create an RTCPeerConnection instance.

S702: The first application of the first terminal invokes a createDataChannel method to request to create a data channel on an RTCPeerConnection instance (or object).

S703: The first application of the first terminal invokes a createOffer method to request the WebRTC user agent of the first terminal to generate media description and return the media description to the first application.

It may be understood that the foregoing first request may be at least one of an RTCPeerConnection command, a createDataChannel command, or a createOffer command. After receiving the first request, the WebRTC user agent may determine whether a created connection is capable of carrying a first data channel. A specific process of S701 to S703 is similar to the foregoing process of S101 to S103. For details, refer to corresponding description in S101 to S103.

S704: If there is no created connection capable of carrying the first data channel, the WebRTC user agent of the first terminal returns second media description information to the first application to indicate a second connection.

For example, content included in the second media description information may be shown in Table 9.

S705: The first application of the first terminal invokes a setLocalDescription API to trigger the WebRTC user agent to parse the second media description information and create the second connection, for example, create a local resource for receiving and decoding media, and set a parameter of the first data channel.

S706: The first application of the first terminal invokes an RTCPeerSignallingService API to trigger the first terminal to send a first SDP offer to a second terminal via an IMS network. Correspondingly, the second terminal receives the first SDP offer.

The first SDP offer may include ninth media description information.

S707: A WebRTC user agent of the second terminal sends media description information, that is related to a first application, in the ninth media description information, to a first application of the second terminal through the RTCPeerSignallingService API.

For example, the media description information sent by the WebRTC user agent of the second terminal to the first application may be shown in Table 9.

S708: The first application of the second terminal invokes the RTCPeerConnection API to request the WebRTC user agent of the second terminal to create an RTCPeerConnection instance.

S709: The first application of the second terminal invokes a setRemoteDescription API to apply the received media description information.

S710: The first application of the second terminal invokes the createDataChannel method to request to create the data channel on the RTCPeerConnection instance (or object).

S711: The first application of the second terminal invokes a createAnswer method to request the WebRTC user agent of the second terminal to generate media description and return the media description to the first application.

It may be understood that S708 and S710 to S711 are used by the first application of the second terminal to request to create the first data channel, and the WebRTC user agent of the second terminal may determine whether the created connection is capable of carrying the first data channel.

S712: If there is no created connection capable of carrying the first data channel, the WebRTC user agent of the second terminal returns fourteenth media description information to the first application to indicate the second connection.

It may be understood that any connection (for example, a first connection, the second connection, or a third connection) in this application is established through negotiation between two endpoints of the connection. In other words, each endpoint may configure a group of protocol address information and protocol port information for the connection. Therefore, the connection may be associated with two groups of protocol address information and protocol port information. The second connection herein is used as an example. Two endpoints of the second connection are the first terminal and the second terminal. The first terminal configures a group of protocol address information and protocol port information for the second connection in S704, for the first terminal to receive/send data through the second connection. The second terminal configures a group of protocol address information and protocol port information for the second connection in S712, for the second terminal to receive/send data through the second connection. It may be understood that the two groups of protocol addresses may be different, and the two groups of protocol port numbers may also be different. Therefore, content included in the fourteenth media description information is similar to the content included in the second media description information, where specific values of parameters may be different, for example, IP addresses, UDP port numbers, and SCTP port numbers are different.

S713: The first application of the second terminal invokes the setLocalDescription API to trigger the WebRTC user agent to parse the fourteenth media description information and create the second connection, for example, create a local resource for receiving and decoding media, and set a parameter of the first data channel.

S714: The first application of the second terminal invokes the RTCPeerSignallingService API to trigger the second terminal to send a first SDP answer to the first terminal via the IMS network. Correspondingly, the first terminal receives the first SDP answer.

The first SDP answer may include fifteenth media description information. The fifteenth media description information includes information about the second connection and identification information of the first data channel created by the second terminal. The information about the second connection herein may include IP protocol address information, UDP port information, and SCTP port information that are configured by the second terminal for the second connection.

S715: The WebRTC user agent of the first terminal sends media description information, that is related to a first application, in the fifteenth media description information, to the first application of the first terminal through the RTCPeerSignallingService API.

S716: The first application of the first terminal invokes the setRemoteDescription API to set a resource configured by the second terminal for the first data channel.

It may be understood that, after S716, the WebRTC user agent of the first terminal and the WebRTC user agent of the second terminal may create the second connection and a corresponding stream. The first application of the first terminal and the first application of the second terminal may send data to an application layer or receive data from the application layer through the second connection.

S717: The second application of the first terminal invokes the RTCPeerConnection API to request the WebRTC user agent of the first terminal to create an RTCPeerConnection instance.

S718: The second application of the first terminal invokes the createDataChannel method to request to create a data channel on the RTCPeerConnection instance (or object).

S719: The second application of the first terminal invokes the createOffer method to request the WebRTC user agent of the first terminal to generate media description and return the media description to the second application.

It may be understood that S717 to S719 are used by the second application to request to create the second data channel, and the WebRTC user agent may determine whether the created connection is capable of carrying the second data channel.

S720: If the second connection is capable of carrying the second data channel, the WebRTC user agent of the first terminal returns fifth media description information to the second application to indicate the second connection.

For example, content included in the fifth media description information may be shown in Table 13.

S721: The second application of the first terminal invokes the setLocalDescription API to trigger the WebRTC user agent to apply the fifth media description information.

S722: The second application of the first terminal invokes the RTCPeerSignallingService API to trigger the first terminal to send a second SDP offer to the second terminal via the IMS network. Correspondingly, the second terminal receives the second SDP offer.

The second SDP offer may include sixth media description information.

S723: The WebRTC user agent of the second terminal sends media description information, that is related to a second application, in the sixth media description information, to a second application of the second terminal through the RTCPeerSignallingService API.

For example, the media description information sent by the WebRTC user agent of the second terminal to the second application may be shown in Table 13.

S724: The second application of the second terminal invokes the RTCPeerConnection API to request the WebRTC user agent of the second terminal to create an RTCPeerConnection instance.

S725: The second application of the second terminal invokes the setRemoteDescription API to apply the received media description information.

S726: The second application of the second terminal invokes the createDataChannel method to request to create a data channel on the RTCPeerConnection instance (or object).

S727: The second application of the second terminal invokes the createAnswer method to request the WebRTC user agent of the second terminal to generate media description and return the media description to the second application.

It may be understood that S724, S726, and S727 are used by the second application to request to create the second data channel, and the WebRTC user agent of the second terminal may determine whether the created connection is capable of carrying the second data channel.

S728: If the second connection is capable of carrying the second data channel, the WebRTC user agent of the second terminal returns sixteenth media description information to the second application to indicate the second connection.

It may be understood that content included in the sixteenth media description information is similar to the content included in the fifth media description information, where specific values of parameters may be different, for example, IP addresses, UDP port numbers, and SCTP port numbers are different.

S729: The second application of the second terminal invokes the setLocalDescription API to trigger the WebRTC user agent to apply the sixteenth media description information.

S730: The second application of the second terminal invokes the RTCPeerSignallingService API to trigger the second terminal to send a second SDP answer to the first terminal via the IMS network. Correspondingly, the first terminal receives the second SDP answer.

The second SDP answer may include seventeenth media description information. The seventeenth media description information includes the information about the second connection, the identification information of the first data channel created by the second terminal, and identification information of the second data channel created by the second terminal. The information about the second connection herein may include the IP protocol address information, the UDP port information, and the SCTP port information that are configured by the second terminal for the second connection.

S731: The WebRTC user agent of the first terminal sends media description information, that is related to a second application, in the seventeenth media description information, to the second application of the first terminal through the RTCPeerSignallingService API.

S732: The second application of the first terminal invokes the setRemoteDescription API to set a resource configured by the second terminal for the second data channel.

S733: The WebRTC user agent of the first terminal updates the second connection, and adds, to the second connection, a stream corresponding to the second data channel, and the WebRTC user agent of the second terminal updates the second connection, and adds, to the second connection, a stream corresponding to the second data channel.

It may be understood that after S733, both the first application and the second application of the first terminal may send data to the application layer or receive data from the application layer through the second connection. Similarly, both the first application and the second application of the second terminal may send data to the application layer or receive data from the application layer through the second connection.

It may be understood that the actions of the first terminal or the second terminal in the foregoing steps may be performed by the processor 401 in the communication apparatus 40 shown in FIG. 4 by invoking the application program code stored in the memory 403. This is not limited in this application.

According to the method shown in FIG. 7A and FIG. 7B, before creating the data channel, the WebRTC user agent of the first terminal and the WebRTC user agent of the second terminal may determine, in the created connections, whether there is a connection capable of carrying the data channel, to reduce resource overheads.

The following is described by using an example in which the first terminal is an SDP offerer, the second terminal is an SDP answerer, the first terminal creates a first data channel in the manner 1.2, and the second terminal creates the first data channel in the manner 2.2. The first terminal and the second terminal have the terminal architecture shown in FIG. 3D.

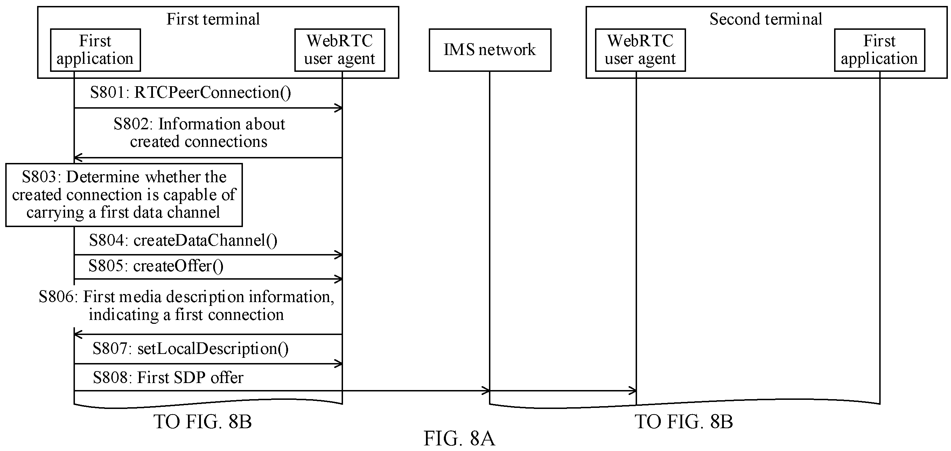

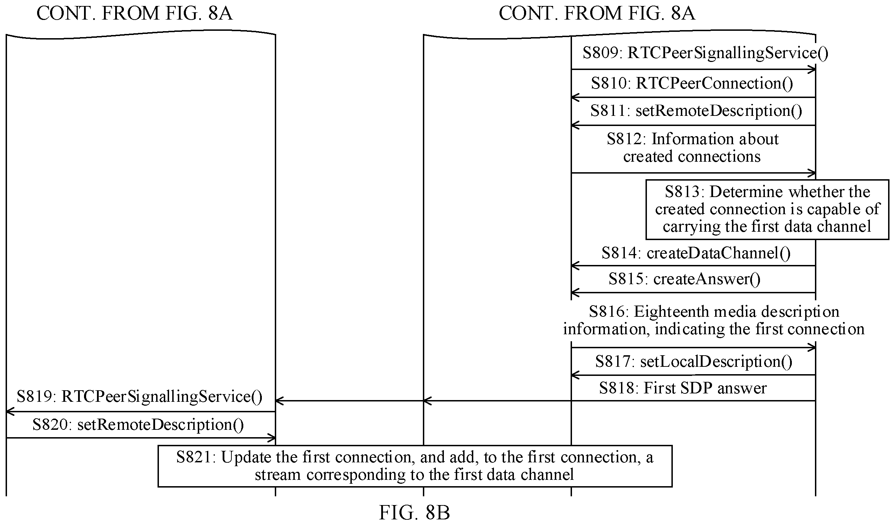

FIG. 8A and FIG. 8B show another communication method according to this application. The communication method may include the following steps.

S801: A first application of a first terminal invokes an RTCPeerConnection API to request a WebRTC user agent of the first terminal to create an RTCPeerConnection instance.

S802: The WebRTC user agent of the first terminal sends information about created connections to the first application.

For example, the WebRTC user agent of the first terminal may provide a query interface for the first application, to query created connections. When the first application invokes the query interface, the WebRTC user agent returns information about the created connections to the first application. The information about the created connections indicates each created connection, for example, indicate an IP address, UDP port information, and SCTP port information that are associated with each connection.

It may be understood that the first application may alternatively invoke an interface to query the created connections before S801. This is not limited.

S803: The first application of the first terminal determines whether the created connection is capable of carrying the first data channel.

S804: If a first connection in the created connections is capable of carrying the first data channel, the first application of the first terminal invokes a createDataChannel method, and carries information about the first connection when invoking the method.

S805: The first application of the first terminal invokes a createOffer method to request the WebRTC user agent of the first terminal to generate media description and return the media description to the first application.

It may be understood that, because the information about the first connection is carried when the first application invokes the createDataChannel method, the WebRTC user agent determines to use the first connection to carry the first data channel. It should be understood that, in a specific application, the first application may not carry the information about the first connection when invoking the createDataChannel method, but carry the information about the first connection when invoking the createOffer method.

S806: The WebRTC user agent of the first terminal returns first media description information to the first application to indicate the first connection.

For example, content included in the first media description information may be shown in Table 6.

S807: The first application of the first terminal invokes a setLocalDescription API to trigger the WebRTC user agent to apply the first media description information.

S808: The first application of the first terminal invokes an RTCPeerSignallingService API to trigger the first terminal to send a first SDP offer to a second terminal via an IMS network. Correspondingly, the second terminal receives the first SDP offer.

The first SDP offer may include eighth media description information.

S809: A WebRTC user agent of the second terminal sends media description information, that is related to a first application, in the eighth media description information, to a first application of the second terminal through the RTCPeerSignallingService API.

For example, the media description information sent by the WebRTC user agent of the second terminal to the first application may be shown in Table 6.

S810: The first application of the second terminal invokes the RTCPeerConnection API to request the WebRTC user agent of the second terminal to create an RTCPeerConnection instance.

S811: The first application of the second terminal invokes a setRemoteDescription API to apply the received media description information.

S812: The WebRTC user agent of the second terminal sends information about created connections to the first application.

For example, the WebRTC user agent of the second terminal may provide a query interface for the first application, to query created connections. When the first application invokes the query interface, the WebRTC user agent returns information about the created connections to the first application. The information about the created connections indicates each created connection, for example, indicate an IP address, UDP port information, and SCTP port information that are associated with each connection.

It may be understood that the first application may alternatively invoke an interface to query the created connections before S811. This is not limited.

S813: The first application of the second terminal determines whether the created connection is capable of carrying the first data channel.

S814: If the first connection in the created connections is capable of carrying the first data channel, the first application of the second terminal invokes the createDataChannel method, and carries the information about the first connection when invoking the method.

It may be understood that the first connection is a connection corresponding to the first data channel in the connections created by the second terminal.

S815: The first application of the second terminal invokes a createAnswer method to request the WebRTC user agent of the second terminal to generate media description and return the media description to the first application.

It may be understood that, because the information about the first connection is carried when the first application invokes the createDataChannel method, the WebRTC user agent determines to use the first connection to carry the first data channel. It should be understood that, in a specific application, the first application may not carry the information about the first connection when invoking the createDataChannel method, but carry the information about the first connection when invoking the createAnswer method.

S816: The WebRTC user agent in the second terminal returns eighteenth media description information to the first application to indicate the first connection.

It may be understood that content included in the eighteenth media description information is similar to the content included in the first media description information, where specific values of parameters may be different, for example, IP addresses, UDP port numbers, and SCTP port numbers are different.

S817: The first application of the second terminal invokes the setLocalDescription API to trigger the WebRTC user agent to apply the eighteenth media description information.

S818: The first application of the second terminal invokes the RTCPeerSignallingService API to trigger the second terminal to send a first SDP answer to the first terminal via the IMS network. Correspondingly, the first terminal receives the first SDP answer.

The first SDP answer may include nineteenth media description information. The nineteenth media description information includes the information about the first connection and identification information of the first data channel created by the second terminal. The information about the first connection herein may include IP protocol address information, UDP port information, and SCTP port information that are configured by the second terminal for the first connection.

S819: The WebRTC user agent of the first terminal sends media description information, that is related to a first application, in the nineteenth media description information, to the first application of the first terminal through the RTCPeerSignallingService API.

S820: The first application of the first terminal invokes the setRemoteDescription API to set a resource configured by the second terminal for the first data channel.

S821: The WebRTC user agent of the first terminal updates the first connection, and adds, to the first connection, a stream corresponding to the first data channel, and the WebRTC user agent of the second terminal updates the first connection, and adds, to the first connection, a stream corresponding to the first data channel.

It may be understood that after S821, the first application of the first terminal may send data to an application layer or receive data from the application layer through the first connection, and the first application of the second terminal may send data to the application layer or receive data from the application layer through the first connection.

It may be understood that the actions of the first terminal or the second terminal in the foregoing steps may be performed by the processor 401 in the communication apparatus 40 shown in FIG. 4 by invoking the application program code stored in the memory 403. This is not limited in this application.

According to the method shown in FIG. 8A and FIG. 8B, the WebRTC user agent of the first terminal and the WebRTC user agent of the second terminal may open interfaces to the first application, for the first application to query the created connections, so that the first application determines whether the created connection is capable of carrying the data channel that the first application requests to create, to reduce resource overheads. FIG. 8A and FIG. 8B are described by using an example in which the first application determines that the first connection in the created connections is capable of carrying the data channel that the first application requests to create. It may be understood that, if the first application determines that the created connection is not capable of carrying the data channel that the first application requests to create, the WebRTC user agent may generate a new "line m" (the second media description information shown in Table 9), and return the new "line m" to the first application.

The following is described by using an example in which the first terminal is an SDP offerer, the second terminal is an SDP answerer, the first terminal creates a first data channel in the manner 1.3 and creates a second data channel in the manner 3.3, and the second terminal creates the first data channel in the manner 2.3 and creates the second data channel in the manner 4.3. The first terminal and the second terminal have the terminal architecture shown in FIG. 3E.

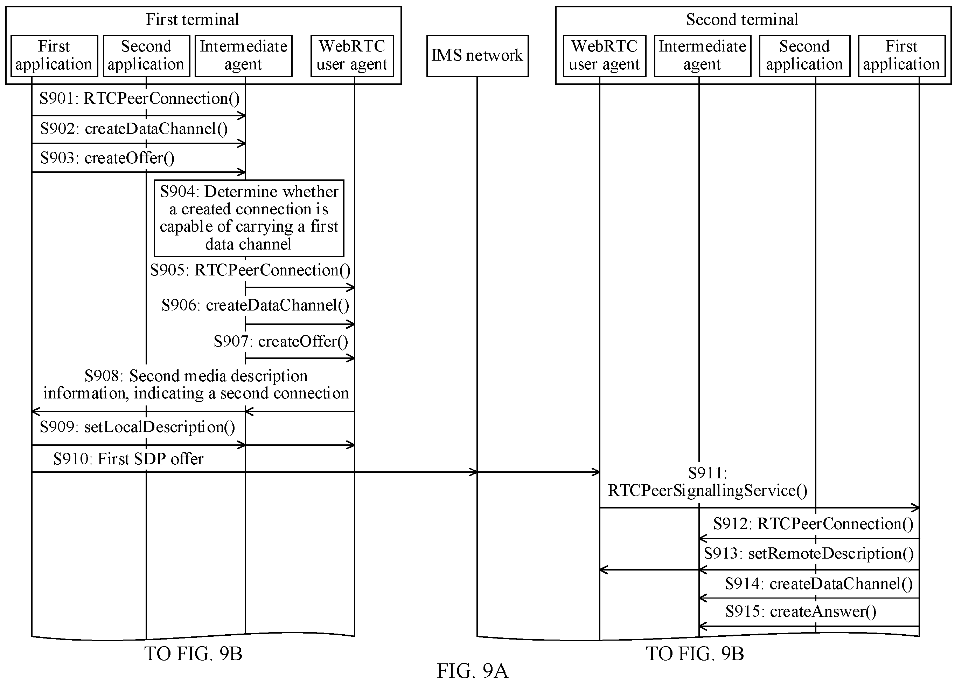

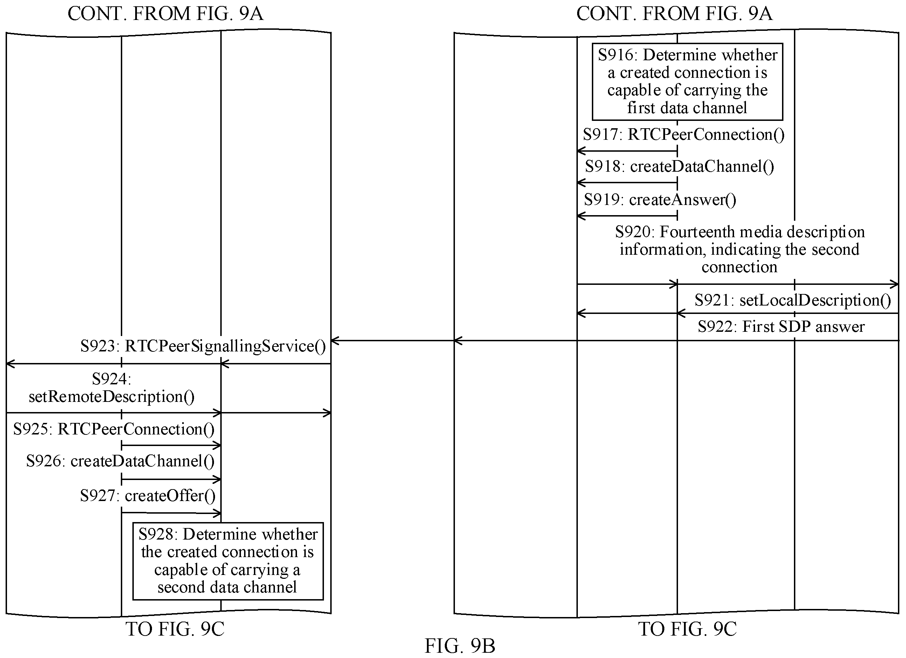

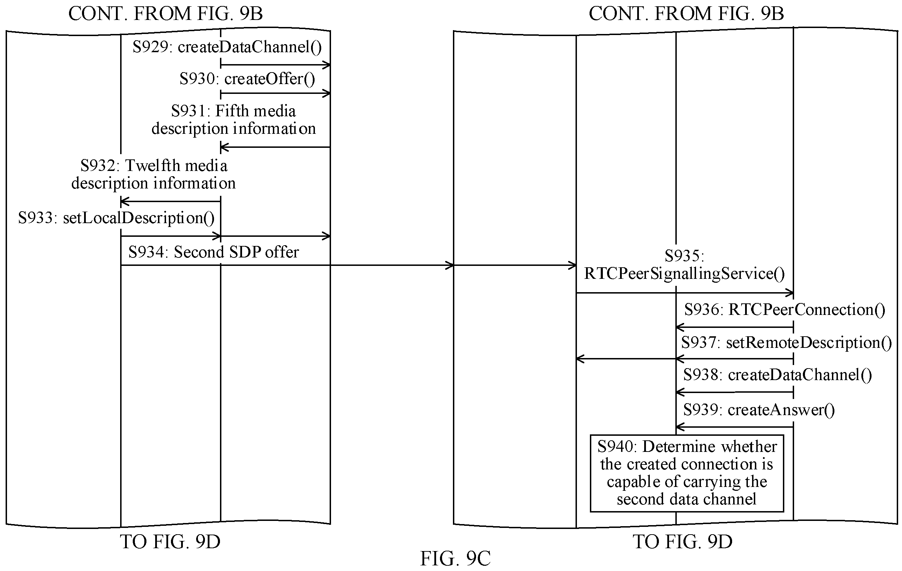

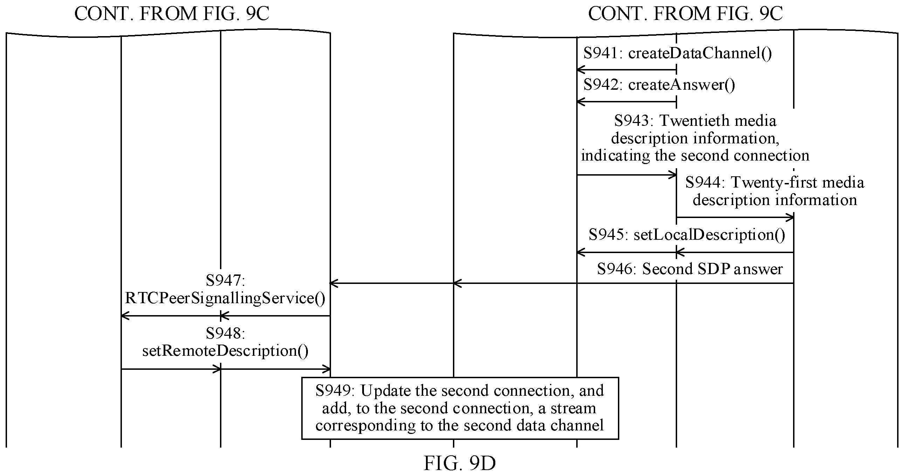

FIG. 9A, FIG. 9B, FIG. 9C, and FIG. 9D show another communication method according to this application. The communication method may include the following steps.

S901: A first application of a first terminal invokes an RTCPeerConnection API to request an intermediate agent of the first terminal to create an RTCPeerConnection instance.

S902: The first application of the first terminal invokes a createDataChannel method to request to create a data channel on the RTCPeerConnection instance (or object).

S903: The first application of the first terminal invokes a createOffer method to request the intermediate agent of the first terminal to generate media description and return the media description to the first application.

It may be understood that the RTCPeerConnection API, the createDataChannel method, and the createOffer method are used to request to create a first data channel. A specific process of S901 to S903 is similar to the foregoing process of S101 to S103. For details, refer to corresponding description in S101 to S103.

S904: The intermediate agent of the first terminal determines whether a created connection is capable of carrying the first data channel.

S905: If there is no created connection capable of carrying the first data channel, the intermediate agent of the first terminal invokes the RTCPeerConnection API to request a WebRTC user agent of the first terminal to create an RTCPeerConnection instance.

S906: The intermediate agent of the first terminal invokes the createDataChannel method to request to create a data channel on the RTCPeerConnection instance (or object).

S907: The intermediate agent of the first terminal invokes the createOffer method to request the WebRTC user agent of the first terminal to generate media description and return the media description to the first application.

It may be understood that the foregoing first request may be at least one of an RTCPeerConnection command, a createDataChannel command, or a createOffer command. A specific process of S905 to S907 is similar to the foregoing process of S101 to S103. For details, refer to corresponding description in S101 to S103.

S908: The WebRTC user agent of the first terminal sends second media description information to the first application through the intermediate agent, to indicate a second connection.

For example, content included in the second media description information may be shown in Table 9.

S909: The first application of the first terminal invokes a setLocalDescription API to trigger the WebRTC user agent to parse the second media description information and create the second connection, for example, create a local resource for receiving and decoding media, and set a parameter of the first data channel.

It may be understood that the intermediate agent of the first terminal may transparently transmit an invoking command of the first application to the WebRTC user agent.

S910: The first application of the first terminal invokes an RTCPeerSignallingService API to trigger the first terminal to send a first SDP offer to a second terminal via an IMS network. Correspondingly, a second terminal receives the first SDP offer.

The first SDP offer may include ninth media description information.

It may be understood that S910 may alternatively be triggered by the intermediate agent. This is not limited.

S911: A WebRTC user agent of the second terminal sends media description information, that is related to a first application, in the ninth media description information, to a first application of the second terminal through the RTCPeerSignallingService API.

For example, the media description information sent by the WebRTC user agent of the second terminal to the first application may be shown in Table 9.

It may be understood that the intermediate agent of the second terminal may transparently transmit, to the first application, the information sent by the WebRTC user agent.

S912: The first application of the second terminal invokes the RTCPeerConnection API to request the intermediate agent of the second terminal to create an RTCPeerConnection instance.

S913: The first application of the second terminal invokes a setRemoteDescription API to apply the received media description information.

It may be understood that a setRemoteDescription invoking command of the first application may be transparently transmitted to the WebRTC user agent through the intermediate agent.

S914: The first application of the second terminal invokes the createDataChannel method to request the intermediate agent of the second terminal to create a data channel on the RTCPeerConnection instance (or object).

S915: The first application of the second terminal invokes a createAnswer method to request the intermediate agent of the second terminal to generate media description and return the media description to the first application.

It may be understood that S912, S914, and S915 are used by the first application of the second terminal to request to create the first data channel.

S916: The intermediate agent of the second terminal may determine whether a created connection is capable of carrying the first data channel.

S917: If there is no created connection capable of carrying the first data channel, the intermediate agent of the second terminal invokes the RTCPeerConnection API to request the WebRTC user agent of the second terminal to create an RTCPeerConnection instance.

S918: The intermediate agent of the second terminal invokes the createDataChannel method to request to create a data channel on the RTCPeerConnection instance (or object).

S919: The intermediate agent of the second terminal invokes the createAnswer method to request the WebRTC user agent of the second terminal to generate media description and return the media description to the first application.

S920: The WebRTC user agent of the second terminal returns fourteenth media description information to the first application through the intermediate agent, to indicate the second connection.

It may be understood that content included in the fourteenth media description information is similar to the content included in the second media description information, where specific values of parameters may be different, for example, IP addresses, UDP port numbers, and SCTP port numbers are different.

S921: The first application of the second terminal invokes the setLocalDescription API to trigger the WebRTC user agent to parse the fourteenth media description information and create the second connection, for example, create a local resource for receiving and decoding media, and set a parameter of the first data channel.

It may be understood that the intermediate agent may transparently transmit a setLocalDescription invoking command of the first application to the WebRTC user agent.

S922: The first application of the second terminal invokes the RTCPeerSignallingService API to trigger the second terminal to send a first SDP answer to the first terminal via the IMS network. Correspondingly, the first terminal receives the first SDP answer.

The first SDP answer may include fifteenth media description information. The fifteenth media description information includes information about the second connection and identification information of the first data channel created by the second terminal. The information about the second connection herein may include IP protocol address information, UDP port information, and SCTP port information that are configured by the second terminal for the second connection.

It may be understood that S922 may alternatively be triggered by the intermediate agent. This is not limited.

S923: The WebRTC user agent of the first terminal sends media description information, that is related to a first application, in the fifteenth media description information, to the first application of the first terminal through the RTCPeerSignallingService API.

It may be understood that the intermediate agent of the first terminal may transparently transmit, to the first application, the information sent by the WebRTC user agent.

S924: The first application of the first terminal invokes the setRemoteDescription API to set a resource configured by the second terminal for the first data channel.

It may be understood that a setRemoteDescription command of the first application may be transparently transmitted to the WebRTC user agent through the intermediate agent.

It may be understood that, after S924, the WebRTC user agent of the first terminal and the WebRTC user agent of the second terminal may create the second connection and a corresponding stream. The intermediate agent of the first terminal may receive data through the second connection, and distribute the data to the first application. The intermediate agent of the second terminal may receive data through the second connection, and distribute the data to the first application.

S925: A second application of the first terminal invokes the RTCPeerConnection API to request the intermediate agent of the first terminal to create an RTCPeerConnection instance.

S926: The second application of the first terminal invokes the createDataChannel method to request to create a data channel on the RTCPeerConnection instance (or object).

S927: The second application of the first terminal invokes the createOffer method to request the intermediate agent of the first terminal to generate media description and return the media description to the second application.

It may be understood that the RTCPeerConnection API, the createDataChannel method, and the createOffer method are used to request to create a second data channel. A specific process of S925 to S927 is similar to the foregoing process of S101 to S103. For details, refer to corresponding description in S101 to S103.

S928: The intermediate agent of the first terminal determines whether the created connection is capable of carrying the second data channel.

S929: If the second connection is capable of carrying the second data channel, the intermediate agent of the first terminal invokes the createDataChannel method to request the WebRTC user agent to create the data channel on the second connection.

S930: The intermediate agent of the first terminal invokes the createOffer method to request the WebRTC user agent of the first terminal to generate media description and return the media description to the second application.

S931: The WebRTC user agent of the first terminal returns fifth media description information to the intermediate agent.

For example, content included in the fifth media description information may be shown in Table 14.

S932: The intermediate agent of the first terminal sends twelfth media description information to the second application. For example, the intermediate agent deletes information about an application other than the second application from the fifth media description, to obtain twelfth media description information shown in Table 13.

S933: The second application of the first terminal invokes the setLocalDescription API to trigger the WebRTC user agent to apply the fifth media description information.

It may be understood that the intermediate agent of the first terminal may transparently transmit a setLocalDescription command of the second application to the WebRTC user agent.

S934: The second application of the first terminal invokes the RTCPeerSignallingService API to trigger the first terminal to send a second SDP offer to the second terminal via the IMS network. Correspondingly, the second terminal receives the second SDP offer.

The second SDP offer may include sixth media description information.

S935: The WebRTC user agent of the second terminal sends media description information, that is related to a second application, in the sixth media description information, to a second application of the second terminal through the RTCPeerSignallingService API.

For example, the media description information sent by the WebRTC user agent of the second terminal to the second application may be shown in Table 13.

It may be understood that the intermediate agent of the second terminal may transparently transmit, to the second application, the information sent by the WebRTC user agent.

S936: The second application of the second terminal invokes the RTCPeerConnection API to request the intermediate agent of the second terminal to create an RTCPeerConnection instance.

S937: The second application of the second terminal invokes the setRemoteDescription API to apply the received media description information.

It may be understood that the intermediate agent of the second terminal may transparently transmit a setRemoteDescription command of the second application to the WebRTC user agent.

S938: The second application of the second terminal invokes the createDataChannel method to request the intermediate agent to create a data channel on the RTCPeerConnection instance (or object).

S939: The second application of the second terminal invokes the createAnswer method to request the intermediate agent of the second terminal to generate media description and return the media description to the second application.

It may be understood that S936, S938, and S939 are used by the second application to request to create the second data channel.

S940: The intermediate agent of the second terminal may determine whether the created connection is capable of carrying the second data channel.

S941: If the second connection is capable of carrying the second data channel, the intermediate agent of the second terminal invokes the createDataChannel method to request the WebRTC user agent to create the data channel on the second connection.

S942: The intermediate agent of the second terminal invokes the createAnswer method to request the WebRTC user agent of the second terminal to generate media description and return the media description to the second application.

S943: The WebRTC user agent of the second terminal returns twentieth media description information to the intermediate agent to indicate the second connection.

It may be understood that content included in the twentieth media description information is similar to the content included in the fifth media description information, where specific values of parameters may be different, for example, IP addresses, UDP port numbers, and SCTP port numbers are different.

S944: The intermediate agent of the second terminal returns twenty-first media description information to the second application. For example, the intermediate agent deletes information about an application other than the second application from the twentieth media description, to obtain the twenty-first media description information.

S945: The second application of the second terminal invokes the setLocalDescription API to trigger the WebRTC user agent to apply the twentieth media description information.

It may be understood that the intermediate agent of the second terminal may transparently transmit a setLocalDescription command of the second application to the WebRTC user agent.

S946: The second application of the second terminal invokes the RTCPeerSignallingService API to trigger the second terminal to send a second SDP answer to the first terminal via the IMS network. Correspondingly, the first terminal receives the second SDP answer.

The second SDP answer may include twenty-second media description information. The twenty-second media description information includes the information about the second connection, the identification information of the first data channel created by the second terminal, and identification information of the second data channel created by the second terminal. The information about the second connection herein may include the IP protocol address information, the UDP port information, and the SCTP port information that are configured by the second terminal for the second connection.

S947: The WebRTC user agent of the first terminal sends media description information, that is related to a second application, in the twenty-second media description information, to the second application of the first terminal through the RTCPeerSignallingService API.

S948: The second application of the first terminal invokes the setRemoteDescription API to set a resource configured by the second terminal for the second data channel.

It may be understood that the setRemoteDescription command of the second application may be transparently transmitted to the WebRTC user agent through the intermediate agent.

S949: The WebRTC user agent of the first terminal updates the second connection, and adds, to the second connection, a stream corresponding to the second data channel, and the WebRTC user agent of the second terminal updates the second connection, and adds, to the second connection, a stream corresponding to the second data channel.

It may be understood that, after S949, the intermediate agent of the first terminal may receive data through the second connection, and distribute the data to the first application or the second application, and the intermediate agent of the second terminal may receive data through the second connection, and distribute the data to the first application or the second application.

It may be understood that the actions of the first terminal or the second terminal in the foregoing steps may be performed by the processor 401 in the communication apparatus 40 shown in FIG. 4 by invoking the application program code stored in the memory 403. This is not limited in this application.

According to the method shown in FIG. 9A, FIG. 9B, FIG. 9C, and FIG. 9D, before the data channel is created, the intermediate agent of the first terminal and the intermediate agent of the second terminal may determine, in created connections, whether there is a connection capable of carrying the data channel, to reduce resource overheads. In other words, the intermediate agent may have a connection management function. In addition to the connection management function, the intermediate agent further has a data distribution function. For example, the intermediate agent may distribute received data to a corresponding application. When an application needs to send data, the data may be sent through the intermediate agent in a unified manner. It may be understood that, for the method shown in FIG. 9A, FIG. 9B, FIG. 9C, and FIG. 9D, a function of the WebRTC user agent does not need to be updated, and therefore, it is convenient to deploy the method on a terminal.

Embodiments mentioned above in this application may be combined when the solutions do not conflict. This is not limited.

The foregoing mainly describes the solutions provided in this application from the perspective of interaction between network elements. Correspondingly, this application further provides a communication apparatus. The communication apparatus may be the communication entity in the foregoing method embodiments, an apparatus including the foregoing communication entity, or a component that can be used in the communication entity. It may be understood that the foregoing communication entity includes a corresponding hardware structure and/or software module for performing each function to implement the functions. A person skilled in the art should be easily aware that, in combination with units and algorithm operations of the examples described in embodiments disclosed in this specification, this application can be implemented by using hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, functional modules of the communication entity may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It may be understood that division into the modules in this application is an example, and is merely logical function division. During actual implementation, there may be another division manner.

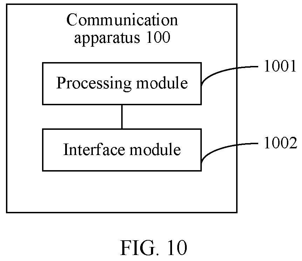

For example, when each functional module is obtained through division in an integrated manner, FIG. 10 is a diagram of a structure of a communication apparatus 100. The communication apparatus 100 includes a processing module 1001 and an interface module 1002. The processing module 1001 may also be referred to as a processing unit, is configured to perform an operation other than the receiving and sending operations, and for example, may be a processing circuit or a processor. The interface module 1002 may also be referred to as an interface unit, is configured to perform a sending/receiving operation, and for example, may be an interface circuit, a transceiver machine, a transceiver, or a communication interface.

In some embodiments, the communication apparatus 100 may further include a storage module (not shown in FIG. 10), configured to store program instructions and data.

For example, the communication apparatus 100 is configured to implement functions of the communication entity. The communication apparatus 100 is, for example, the communication entity in the embodiment shown in FIG. 5 or the embodiment shown in FIG. 6.

The interface module 1002 is configured to receive a first request. The first request is used to request to create a first data channel. The first data channel is a data channel between the communication apparatus 100 and a second communication apparatus, and is used to carry data of a first application. The first data channel is associated with an IMS session between the communication apparatus 100 and the second communication apparatus. For example, the interface module 1002 may be configured to perform S501.

The processing module 1001 is configured to: if there is one or more created connection capable of carrying the first data channel, control the interface module 1002 to send a response to the first request, where the response includes first media description information, the first media description information includes first indication information, the first indication information indicates a first connection, and the first connection is a connection corresponding to the first data channel in the created connections. For example, the processing module 1001 may be configured to perform S502A. Alternatively, the processing module 1001 is configured to: if there is no created connection capable of carrying the first data channel, control the interface module 1002 to send a response to the first request and create a second connection, where the response includes second media description information, the second media description information includes second indication information, the second indication information indicates the second connection, and the second connection is a connection corresponding to the first data channel. For example, the processing module 1001 may be configured to perform S502B.

In a possible implementation, the first indication information includes internet protocol address information, user datagram protocol port information, and stream control transmission protocol port information.

In a possible implementation, the interface module 1002 is further configured to receive a second request, where the second request is used to request to create a second data channel, the second data channel is used to carry data of a second application, and the second application is different from the first application; and if the created connection is not capable of carrying the second data channel, the processing module 1001 is further configured to control the interface module 1002 to send a response to the second request and create a third connection, where the response to the second request includes third media description information, the third media description information includes third indication information corresponding to the second data channel, and the third indication information indicates the third connection; if the first connection is capable of carrying the second data channel, the processing module 1001 is further configured to control the interface module 1002 to send a response to the second request, where the response to the second request includes fourth media description information, and the fourth media description information includes the first indication information; or if the second connection is capable of carrying the second data channel, the processing module 1001 is further configured to control the interface module 1002 to send a response to the second request, where the response to the second request includes fifth media description information, and the fifth media description information includes the second indication information.

In a possible implementation, that the second connection is capable of carrying the second data channel includes: a quality-of-service requirement of the second data channel is the same as a quality-of-service requirement of the first data channel; or a quality-of-service requirement of the second data channel is lower than a quality-of-service requirement of the first data channel.

In a possible implementation, that the second connection is capable of carrying the second data channel further includes: the second data channel is a data channel between the communication apparatus 100 and the second communication apparatus.

In a possible implementation, the interface module 1002 is further configured to send sixth media description information to the network side, where the sixth media description information includes information about the connection corresponding to the first data channel and information about a connection corresponding to the second data channel.

In a possible implementation, the sixth media description information further includes identification information of the first data channel and identification information of the second data channel.

In a possible implementation, the processing module 1001 is further configured to: if the first request includes information about the first connection, determine that the first connection is capable of carrying the first data channel; or the processing module 1001 is further configured to: if the first request does not include the information about the connection corresponding to the first data channel, determine that none of created connections is capable of carrying the first data channel.

When the communication apparatus 100 is configured to implement the functions of the communication entity, for other functions that can be implemented by the communication apparatus 100, refer to related description of the embodiments shown in FIG. 5 to FIG. 9D. Details are not described.

In a simple embodiment, a person skilled in the art may figure out that the communication apparatus 100 may be in the form shown in FIG. 4. For example, the processor 401 in FIG. 4 may invoke the computer-executable instructions stored in the memory 403, to cause the communication apparatus 100 to perform the method in the foregoing method embodiments.

For example, functions/implementation processes of the processing module 1001 and the interface module 1002 in FIG. 10 may be implemented by the processor 401 in FIG. 4 by invoking the computer-executable instructions stored in the memory 403. Alternatively, a function/an implementation process of the processing module 1001 in FIG. 10 may be implemented by the processor 401 in FIG. 4 by invoking the computer-executable instruction stored in the memory 403, and a function/an implementation process of the interface module 1002 in FIG. 10 may be implemented by using the communication interface 404 in FIG. 4.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built in a system on chip (system on chip, SoC) or an ASIC, or may be an independent semiconductor chip. In addition to a core that is configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this application.

Optionally, this application further provides a computer-readable storage medium. All or some of the procedures in the foregoing method embodiments may be implemented by a computer program instructing related hardware. The program may be stored in the foregoing computer-readable storage medium. When the program is executed, the procedures of the foregoing method embodiments may be included. The computer-readable storage medium may be an internal storage unit of the communication apparatus in any one of the foregoing embodiments, for example, a hard disk drive or a memory of the communication apparatus. Alternatively, the foregoing computer-readable storage medium may be an external storage device of the foregoing communication apparatus, for example, a plug-in hard disk, a smart media card (smart media card, SMC), a secure digital (secure digital, SD) card, or a flash card (flash card) that is configured on the communication apparatus. Further, the foregoing computer-readable storage medium may include both an internal storage unit and an external storage device of the foregoing communication apparatus. The foregoing computer-readable storage medium is configured to store the computer program and store other programs and data that are required by the communication apparatus. The foregoing computer-readable storage medium may be further configured to temporarily store data that has been output or is to be output.

Optionally, this application further provides a computer program product. All or some of the procedures in the foregoing method embodiments may be implemented by a computer program instructing related hardware. The program may be stored in the foregoing computer program product. When the program is executed, the procedures of the foregoing method embodiments may be included.

Optionally, this application further provides computer instructions. All or some of the procedures in the foregoing method embodiments may be implemented by the computer instructions instructing related hardware (for example, a computer, a processor, or a terminal). The program may be stored in the foregoing computer-readable storage medium or the foregoing computer program product.

Optionally, this application further provides a communication system, including the first terminal and the second terminal in the foregoing embodiments.

Based on the foregoing description of the implementations, a person skilled in the art may clearly understand that, for the purpose of convenient and brief description, the division into the foregoing functional modules is merely used as an example for description. During actual application, the foregoing functions can be allocated to different functional modules for implementation as required, in other words, an inner structure of the apparatus is divided into different functional modules to implement all or some of the functions described above.

In the several embodiments provided in this application, it should be understood that the disclosed apparatus and method may be implemented in other manners. For example, the foregoing described apparatus embodiment is merely an example. For example, the division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing description is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
receiving a first request, wherein the first request is used to request to create a first data channel, the first data channel is a data channel between a first communication apparatus and a second communication apparatus and is used to carry data of a first application, and the first data channel is associated with an internet protocol multimedia subsystem IMS session between the first communication apparatus and the second communication apparatus; and
if there is one or more created connection capable of carrying the first data channel, sending a response to the first request, wherein the response comprises first media description information, the first media description information comprises first indication information, the first indication information indicates a first connection, and the first connection is a connection corresponding to the first data channel in the created connections; or
if there is no created connection capable of carrying the first data channel, sending a response to the first request and creating a second connection, wherein the response comprises second media description information, the second media description information comprises second indication information, the second indication information indicates the second connection, and the second connection is a connection corresponding to the first data channel.

2. The method according to claim 1, wherein the first indication information comprises internet protocol address information, user datagram protocol port information, and stream control transmission protocol port information.

3. The method according to claim 1 or 2, wherein the method further comprises:
receiving a second request, wherein the second request is used to request to create a second data channel, the second data channel is used to carry data of a second application, and the second application is different from the first application; and
if the created connection is not capable of carrying the second data channel, sending a response to the second request and creating a third connection, wherein the response to the second request comprises third media description information, the third media description information comprises third indication information corresponding to the second data channel, and the third indication information indicates the third connection;
if the first connection is capable of carrying the second data channel, sending a response to the second request, wherein the response to the second request comprises fourth media description information, and the fourth media description information comprises the first indication information; or
if the second connection is capable of carrying the second data channel, sending a response to the second request, wherein the response to the second request comprises fifth media description information, and the fifth media description information comprises the second indication information.

4. The method according to claim 3, wherein that the second connection is capable of carrying the second data channel comprises:
a quality-of-service requirement of the second data channel is the same as a quality-of-service requirement of the first data channel; or
a quality-of-service requirement of the second data channel is lower than a quality-of-service requirement of the first data channel.

5. The method according to claim 4, wherein that the second connection is capable of carrying the second data channel further comprises:
the second data channel is a data channel between the first communication apparatus and the second communication apparatus.

6. The method according to any one of claims 3 to 5, wherein the method further comprises:
sending sixth media description information to a network side, wherein the sixth media description information comprises information about the connection corresponding to the first data channel and information about a connection corresponding to the second data channel.

7. The method according to claim 6, wherein the sixth media description information further comprises identification information of the first data channel and identification information of the second data channel.

8. The method according to any one of claims 1 to 7, wherein the method further comprises:
if the first request comprises information about the first connection, determining that the first connection is capable of carrying the first data channel; or
if the first request does not comprise the information about the connection corresponding to the first data channel, determining that none of created connections is capable of carrying the first data channel.

9. A communication apparatus, wherein the communication apparatus comprises an interface module and a processing module, wherein
the interface module is configured to receive a first request, wherein the first request is used to request to create a first data channel, the first data channel is a data channel between the communication apparatus and a second communication apparatus and is used to carry data of a first application, and the first data channel is associated with an internet protocol multimedia subsystem IMS session between the communication apparatus and the second communication apparatus; and
the processing module is configured to: if there is one or more created connection capable of carrying the first data channel, control the interface module to send a response to the first request, wherein the response comprises first media description information, the first media description information comprises first indication information, the first indication information indicates a first connection, and the first connection is a connection corresponding to the first data channel in the created connections; or
the processing module is configured to: if there is no created connection capable of carrying the first data channel, control the interface module to send a response to the first request and create a second connection, wherein the response comprises second media description information, the second media description information comprises second indication information, the second indication information indicates the second connection, and the second connection is a connection corresponding to the first data channel.

10. The communication apparatus according to claim 9, wherein the first indication information comprises internet protocol address information, user datagram protocol port information, and stream control transmission protocol port information.

11. The communication apparatus according to claim 9 or 10, wherein
the interface module is further configured to receive a second request, wherein the second request is used to request to create a second data channel, the second data channel is used to carry data of a second application, and the second application is different from the first application; and
if the created connection is not capable of carrying the second data channel, the processing module is further configured to control the interface module to send a response to the second request and create a third connection, wherein the response to the second request comprises third media description information, the third media description information comprises third indication information corresponding to the second data channel, and the third indication information indicates the third connection;
if the first connection is capable of carrying the second data channel, the processing module is further configured to control the interface module to send a response to the second request, wherein the response to the second request comprises fourth media description information, and the fourth media description information comprises the first indication information; or
if the second connection is capable of carrying the second data channel, the processing module is further configured to control the interface module to send a response to the second request, wherein the response to the second request comprises fifth media description information, and the fifth media description information comprises the second indication information.

12. The communication apparatus according to claim 11, wherein that the second connection is capable of carrying the second data channel comprises:
a quality-of-service requirement of the second data channel is the same as a quality-of-service requirement of the first data channel; or
a quality-of-service requirement of the second data channel is lower than a quality-of-service requirement of the first data channel.

13. The communication apparatus according to claim 12, wherein that the second connection is capable of carrying the second data channel further comprises:
the second data channel is a data channel between the communication apparatus and the second communication apparatus.

14. The communication apparatus according to any one of claims 11 to 13, wherein
the interface module is further configured to send sixth media description information to a network side, wherein the sixth media description information comprises information about the connection corresponding to the first data channel and information about a connection corresponding to the second data channel.

15. The communication apparatus according to claim 14, wherein the sixth media description information further comprises identification information of the first data channel and identification information of the second data channel.

16. The communication apparatus according to any one of claims 9 to 15, wherein
the processing module is further configured to: if the first request comprises information about the first connection, determine that the first connection is capable of carrying the first data channel; or
the processing module is further configured to: if the first request does not comprise the information about the connection corresponding to the first data channel, determine that none of created connections is capable of carrying the first data channel.

17. A communication apparatus, comprising a processor, wherein the processor is coupled to a memory, the memory is configured to store a program or instructions, and when the program or the instructions are executed by the processor, the apparatus is caused to perform the method according to any one of claims 1 to 8.

18. A computer-readable storage medium, wherein the computer-readable storage medium stores a computer program or instructions, and when the computer program or the instructions are executed, a computer is caused to perform the method according to any one of claims 1 to 8.

19. A computer program product, wherein the computer program product comprises computer program code, and when the computer program code is run on a computer, the computer is caused to implement the method according to any one of claims 1 to 8.
